# EUROPEAN PATENT APPLICATION

(11) **EP 3 524 326 A1**
(43) Date of publication of application: **14.08.2019**
(21) Application number: 17858376.1
(22) Date of filing: 03.10.2017
(51) Int. Cl.: A62D 1/02, B01F 17/16, B01F 17/28

(54) **FIRE EXTINGUISHING AGENT**

(30) Priority: 04.10.2016 JP 2016196421
(71) Applicant: DIC Corporation, Tokyo 174-8520 (JP)
(72) Inventor: SHOUMURA Kenji, Ichihara-shi Chiba 290-8585 (JP)
(74) Representative: TBK
(86) International application number: PCT/JP2017/035922
(87) International publication number: WO 2018/066538

(57) **Abstract**

Provided is a fire extinguishing agent that has a high expansion ratio even in a fire disaster induced by a liquid-based solvent, such as a polar solvent or a non-polar solvent, and has excellent fire resistance and fire-extinguishing performance, the fire extinguishing agent containing a cationic polyamine compound (A), a surfactant (B) having an anionic hydrophilic group and a fluoroalkyl group having 3 to 6 carbon atoms to which a fluorine atom is directly bonded, a polybasic acid compound (C), and one or more surfactants (D) selected from the group consisting of the following general formulae (D1) to (D5): 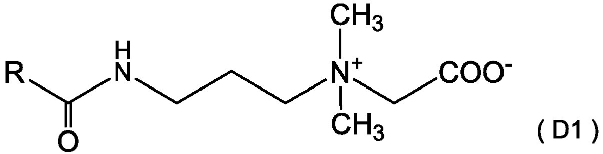 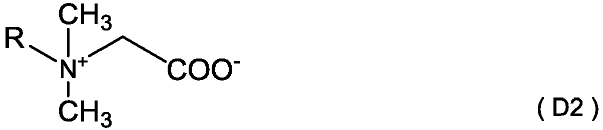 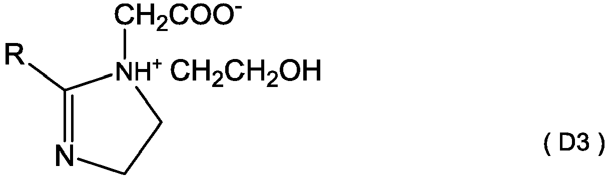 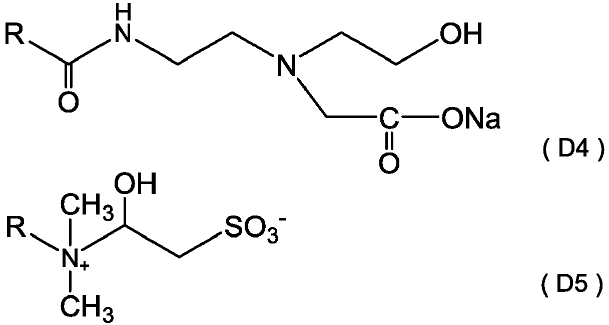 wherein R represents a hydrocarbon group having 7 to 18 carbon atoms.

## Description

### Technical Field

The present invention relates to a fire extinguishing agent that has a high expansion ratio even in a fire disaster induced by a liquid-based solvent, such as a polar solvent or a non-polar solvent, and has excellent fire resistance and fire-extinguishing performance.

### Background Art

Among fire extinguishing agents, a foam fire extinguishing agent is an agent for extinguishing fire by covering a burning solvent surface with foam and the extinction is achieved by three mechanisms of "shut-off of air by covering burning surface", "suppression of generation of flammable vapor", and "cooling by water held in foam".

In general, in the case of a fire disaster induced by a polar solvent, such as an alcohol, a ketone, an ester, an ether, or an amine, the fire is difficult to extinguish by a common foam fire extinguishing agent for petroleum fire disaster since foam disappears immediately after contact with the burning liquid surface. Thus, the followings, for example, have been proposed as a fire extinguishing agent for polar solvents: 1) a protein hydrolysate with a metal soap added, 2) a synthetic surfactant with a metal soap added, 3) a protein hydrolysate with a fluorochemical surfactant added, and 4) a fluorochemical surfactant with a water soluble polymer substance added for modification into a thixotropic liquid.

The type 4 agent is a fire extinguishing agent in which a water soluble polymer substance (polysaccharide or the like) is added to a foam fire extinguishing agent based on a fluorochemical surfactant to impart thixotropic properties. The mechanism is considered as follows: when coming into contact with a polar solvent, the agent is dehydrated on the interface so that the water soluble polymer substance containing foam air forms a gel mat on the solvent surface to prevent direct contact of foam with the solvent and cover the burning liquid surface, thus achieving fire extinction through cooling and suffocation. As compared with the fire extinguishing agents of the type 1, 2, and 3, the type 4 agent has better expansion of foam on a burning liquid surface and is also improved in the fire extinguishing effect.

As one example of the type 4 fire extinguishing agents, a fire extinguishing agent that contains a cationic polyamine-based polymer compound having a primary, a secondary, and a tertiary cationic group in the molecule, which is used as the water soluble polymer substance, the content of the primary cationic group being 40% by mass or less based on the total mass of all the cationic groups, and that further contains a fluorochemical surfactant and a polybasic acid compound (see, for example, PTL 1).

The fire extinguishing agent disclosed in PTL 1 satisfies the fire-extinguishing performance provided in "Ministerial Order to Provide Technical Standards for Foam Fire Extinguishing Media (Order of Ministry of Home Affairs No. 26 of December 9, 1975)" (in foaming with a standard foaming nozzle defined in the ministerial order, expansion ratio: 5.0 or more, extinction time: 5 minutes or less; and fire resistance, i.e., burning surface area at 5 minutes after starting a fire resistance test: 900 cm² or less). Fire extinguishing agents having higher fire-extinguishing performance have been required in recent years: specifically, a fire extinguishing agent having a fire-extinguishing performance defined in ISO-7203-3 "Fire extinguishing media - Foam concentrates - Part 3: Specification for low-expansion foam concentrates for top application to water-miscible liquids" has been required. In the definition, a fire extinguishing agent that satisfies the following fire-extinguishing performance, "in foaming with a UNI-86 nozzle, expansion ratio: 5 or more, extinction time: 3 minutes or less, fire resistance, i. e., burning surface area for 15 minutes in a fire resistance test: 25% or less of a burning pan", is approved as a fire extinguishing agent having a high performance of Extinguishing Performance Grade AR 1A. However, at least fire extinguishing agents described in Examples of the fire extinguishing agents disclosed in PTL 1 cannot satisfy the Extinguishing Performance Grade AR 1A.

### Citation List

### Patent Literature

PTL 1: JP 2001-269421 A

### Summary of Invention

### Technical Problem

An object of the present invention is to provide a fire extinguishing agent that has a high expansion ratio even in a fire disaster induced by a liquid-based solvent, such as a polar solvent or a non-polar solvent, and has excellent fire resistance and fire-extinguishing performance. Solution to Problem

As a result of intensive studies, the present inventors have found that: a fire extinguishing agent (foam fire extinguishing agent) that contains, in addition to a cationic polyamine-based polymer compound, a fluorochemical surfactant, and a polybasic acid compound, a surfactant having a specific structure, is excellent in expansion ratio even in a fire disaster induced by a liquid-based solvent, such as a polar solvent or a non-polar solvent, has a short extinction time, and also has excellent fire resistance; the fire extinguishing agent meets a level of Extinguishing Performance Grade AR 1A of ISO-7203-3 as mentioned above; and the fire extinguishing agent has the performance as above even without the use of a surfactant having a long-chain fluoroalkyl group having 8 or more carbon atoms, such as perfluorooctanoic acid, which may produce a compound having concerns about accumulation in living bodies and the environment, thus completing the invention.

Specifically, the present invention provides a fire extinguishing agent that includes a cationic polyamine compound (A), a surfactant (B) having an anionic hydrophilic group and a fluoroalkyl group having 3 to 6 carbon atoms to which a fluorine atom is directly bonded, a polybasic acid compound (C), and at least one surfactant (D) selected from the group consisting of the following general formulae (D1) to (D5) : 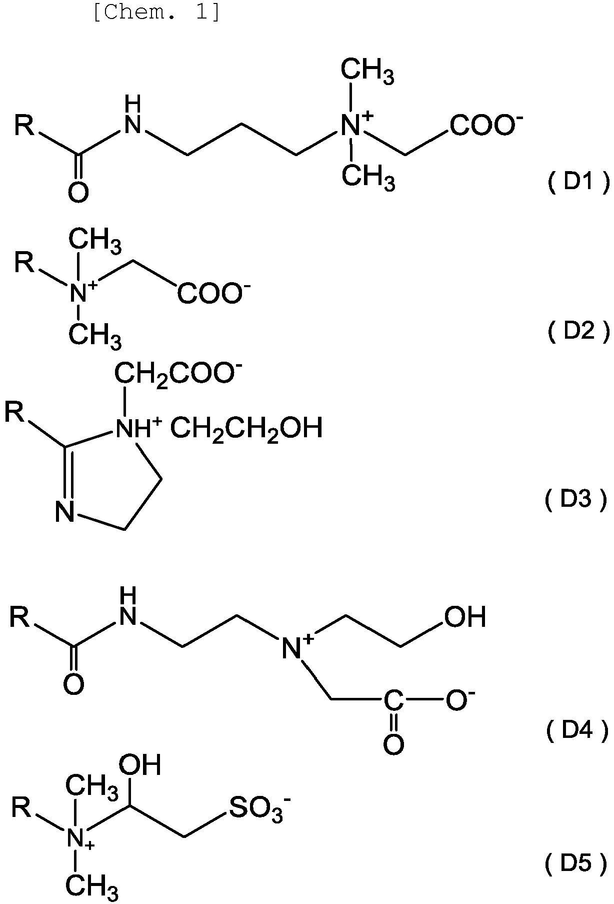 In the formulae, R represents a hydrocarbon group having 7 to 18 carbon atoms.

### Advantageous Effects of Invention

The present invention can provide a fire extinguishing agent that has a high expansion ratio even in a fire disaster induced by a liquid-based solvent, such as a polar solvent or a non-polar solvent, and has excellent fire resistance and fire-extinguishing performance. The present invention can provide a fire extinguishing agent having the characteristics as above even when a surfactant having a long-chain fluoroalkyl group having 8 or more carbon atoms, such as perfluorooctanoic acid, which may produce a compound having concerns about accumulation in living bodies and the environment, is not used as the surfactant (B).

### Description of Embodiments

The polyamine compound (A) for use in the present invention has a cationic group. Examples of the cationic groups include an amino group, a pyridinium group, and a quarternary ammonium group. The cationic group may be in a main chain or in a side chain of the polyamine compound (A). Among such cationic groups, an amino group is preferred since a fire extinguishing agent that has excellent expansion ratio even in a fire disaster induced by a liquid-based solvent, such as a polar solvent or a non-polar solvent, has short extinction time, and also has excellent fire resistance can be obtained.

When the polyamine compound (A) for use in the present invention has an amino group as a cationic group, the ratio of the amounts of the primary, secondary, and tertiary groups (primary cationic groups, secondary cationic groups, tertiary cationic groups) is not limited. However, because of easier production of a fire extinguishing agent that satisfies various requirements for fire extinguishing agents, specifically, for example, various fire-extinguishing performances as mentioned above in addition to the basic properties, such as the specific gravity, pour point, hydrogen ion concentration, amount of sediment, and corrosiveness, as defined in the "Ministerial Order to Provide Technical Standards for Foam Fire Extinguishing Agent (Order of Ministry of Home Affairs No. 26 of December 9, 1975)", the polyamine compound (A) preferably has primary, secondary, and tertiary amino groups in a molecule, the proportion of the primary amino groups being 10 to 40% by mass based on all the amino groups, more preferably 20 to 40% by mass, and further preferably 20 to 35% by mass.

Furthermore, when the polyamine compound (A) for use in the present invention has an amino group as a cationic group, a cationic polyamine compound having a proportion of the primary amino groups based on all the amino groups of 40% by mass or less and having a proportion of the secondary amino groups of 35% by mass or more is preferred since a fire extinguishing agent that is excellent in fire-extinguishing performance and stability after dilution can be provided, and a cationic polyamine compound having a proportion of the secondary amino groups of 35 to 60% by mass based on all the amino groups is more preferred and a cationic polyamine compound having a proportion thereof of 35 to 50% by mass is further preferred.

Regarding the identification of the proportions of the primary, secondary, and tertiary cationic groups in the polyamine compound (A) based on all the cationic groups in the molecule, the proportions by mass of the primary, secondary, and tertiary cationic groups (for example, -NH₂, -NH-, and -N= in the case of polyethylenimine described later) in the molecule can be calculated from peaks, chemical shifts thereof, and integrated carves in a ¹³C-NMR spectrum measured by a nuclear magnetic resonance spectroscopy.

The degree of polymerization of the cationic polyamine compound (A) for use in the present invention is preferably, but limited by the solubility in water, an oligomer region to several tens of thousands or more, specifically, 1,000 to 1,000,000 in terms of the number average molecular weight (Mn) because of easier production of a fire extinguishing agent having excellent fire-extinguishing performance to polar solvent, more preferably 4,000 to 300,000, and particularly preferably 50,000 to 100,000. In addition, the polyamine compound (A) for use in the present invention is soluble in water, and the solubility in water is, for example, preferably 0.1% by mass or more at 25°C.

In the present invention, the number average molecular weight (Mn) and the weight average molecular weight (Mw) are values converted in terms of polystyrene on the basis of a measurement by gel permeation chromatography (hereinafter referred to as "GPC"). Note that the conditions of GPC measurement are as follows.

### [GPC measurement conditions]

Measurement apparatus: "HLC-8220 GPC" from TOSOH CORPORATION
Column: guard column "HHR-H" (6.0 mm I.D. × 4 cm) from TOSOH CORPORATION + "TSK-GEL GMHHR-N" (7.8 mm I.D. × 30 cm) from TOSOH CORPORATION + "TSK-GEL GMHHR-N" (7.8 mm I.D. × 30 cm) from TOSOH CORPORATION + "TSK-GEL GMHHR-N" (7.8 mm I.D. × 30 cm) from TOSOH CORPORATION + "TSK-GEL GMHHR-N" (7.8 mm I.D. × 30 cm) from TOSOH CORPORATION
Detector: ELSD ("ELSD2000" from ORTEC Ltd.)
Data processing: "GPC-8020 Model II data analysis version 4.30" from TOSOH CORPORATION

### Measurement conditions:

Column temperature: 40°C
Eluent: tetrahydrofuran (THF)
Flow rate: 1.0 ml/min

Sample: a tetrahydrofuran solution of 1.0% by mass in terms of resin solid was filtered through a microfilter (5 µl).

Standard sample: the following mono-dispersed polystyrene having a known molecular weight was used in accordance with the measurement manual of the "GPC-8020 Model II data analysis version 4.30".

### (Mono-dispersed polystyrene)

"A-500" from TOSOH CORPORATION
"A-1000" from TOSOH CORPORATION
"A-2500" from TOSOH CORPORATION
"A-5000" from TOSOH CORPORATION
"F-1" from TOSOH CORPORATION
"F-2" from TOSOH CORPORATION
"F-4" from TOSOH CORPORATION
"F-10" from TOSOH CORPORATION
"F-20" from TOSOH CORPORATION
"F-40" from TOSOH CORPORATION
"F-80" from TOSOH CORPORATION
"F-128" from TOSOH CORPORATION
"F-288" from TOSOH CORPORATION
"F-550" from TOSOH CORPORATION

As the cationic polyamine compound (A) for use in the present invention, polyamine compounds of the following (A-I) to (A-XI) may be mentioned.
(A-I)
   Polyethylenimine
(A-II)
   N-Substituted polyethylenimine

Examples of the N-substituents include -CₙH₂ₙ₊₁, - CONHCₙH₂ₙ₊₁, -COCₙH₂ₙ₊₁, and -(CH₂CH₂O)ₙ-H, wherein n is, for example, an integer of 1 to 6.

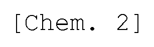

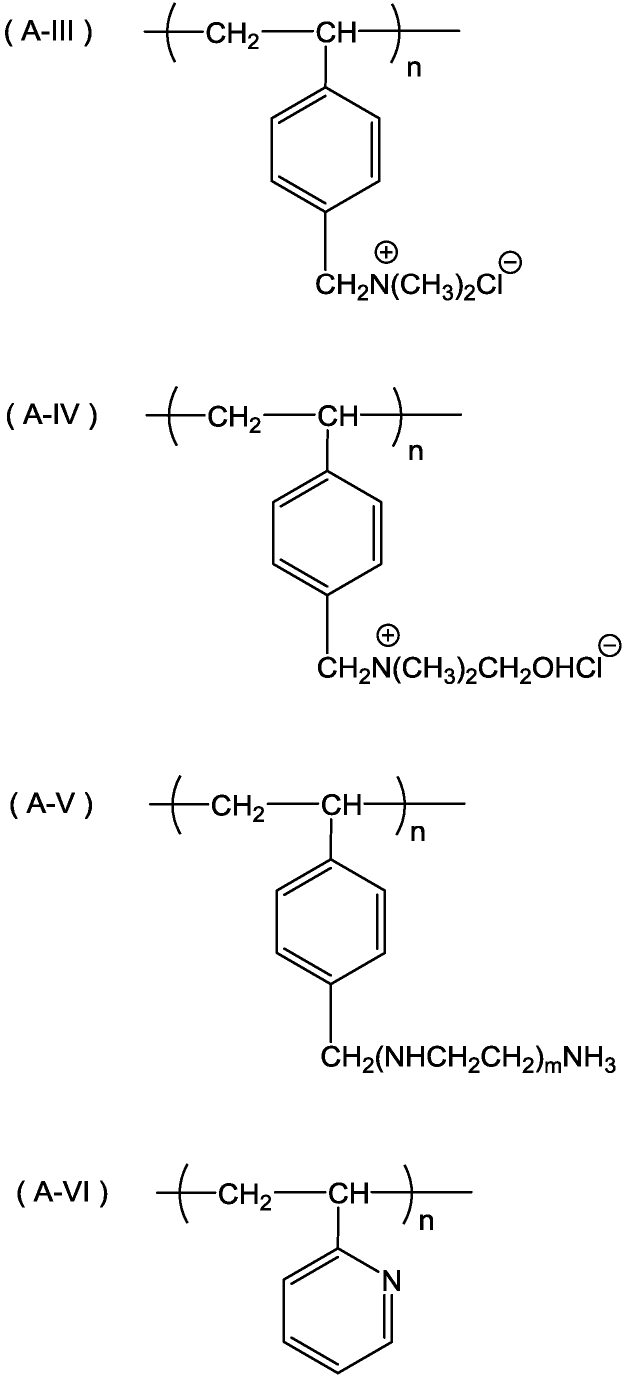

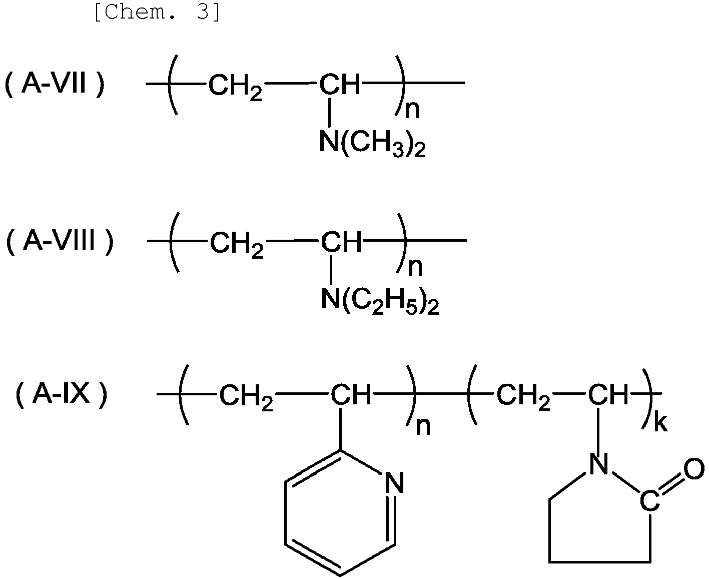

In (A-III) to (A-IX), n is an integer of 10 to 5000. In (A-V), m is an integer of 1 to 50. In (A-IX), k is an integer of 10 to 5000.
(A-X)
   Melamine-formaldehyde condensate
(A-XI)
   Guanidine-formaldehyde condensate

Among the cationic polyamine compounds (A) for use in the present invention, from the viewpoints of the compatibility with various additives, such as an additional foam stabilizer, a freezing point depressor, an antirust agent, and a pH modifier, cost advantage, safety to human body and environment, and availability of raw materials, a polyethylenimine or a partially-modified polyethylenimine is preferred.

Among the cationic polyamine compounds (A) for use in the present invention, a polyethylenimine which can be preferably used can be produced, for example, by a method of directly dehydrating monoethanolamine to open the ring in the presence of a catalyst in a gas layer to synthesize ethylenimine, and then subjecting the ethylenimine to open-ring polymerization in the presence of an acid catalyst. A polyethylenimine produced by this process is not obtained as a completely linear polymer in terms of reaction kinetics, and as shown in the following formula, a polymer compound having a branched structure containing primary amino groups, secondary amino groups, and tertiary amino groups is produced. In addition, as a catalyst, any of an organic metal catalyst, an organic catalyst, an inorganic catalyst, and the like can be used, and depending on the used catalyst, the branched structure varies and thus the ratio of the primary amino groups, the secondary amino groups, and the tertiary amino groups in the molecule of the obtained compound also varies. 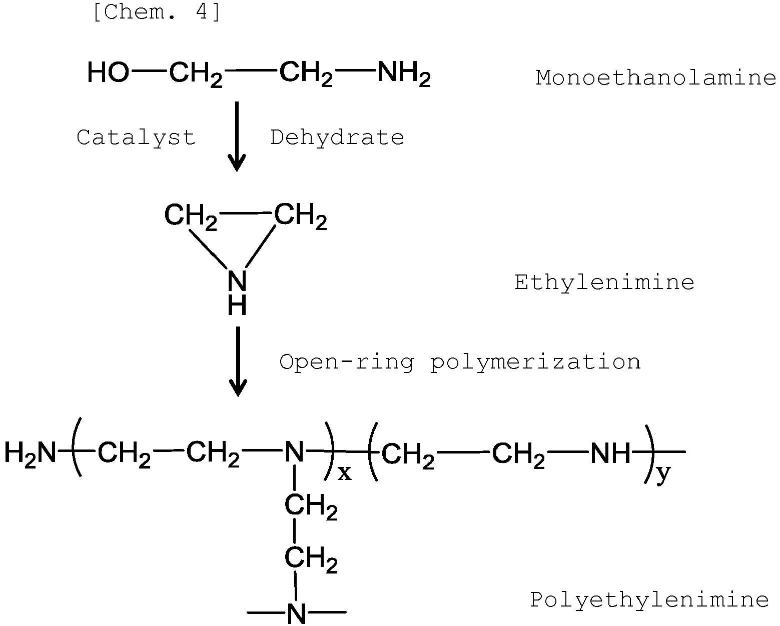 In the formula, x is, for example, 25 to 9000, y is, for example, 8 to 12000.

The surfactant (B) for use in the present invention contains a fluoroalkyl group having 3 to 6 carbon atoms to which a fluorine atom is directly bonded. Examples of the fluoroalkyl group may include those having the following structures:
[Chem. 5]

-CₙF₂ₙ₊₁ (Rf-1)

-CₙF₂ₙH (Rf-2)

-CₙF₂ₙ₋₁ (Rf-3)

-CₙF₂ₙ₋₃ (Rf-4)

wherein n is 3 to 6.

In addition, the surfactant (B) for use in the present invention has an anionic hydrophilic group. Preferred examples of the anionic hydrophilic groups include -COOH, - SO₃H, -OSO₃H, and -OP(OH)₂. Among them, since an ion pair is easily formed with an ion derived from the cationic polyamine compound (A), such as an amino ion, resulting in a fire extinguishing agent having good liquid resistance, -COOH or -SO₃H is preferred, and -COOH is particularly preferred. The surfactant may have an organic or inorganic cationic hydrophilic group as a counter ion of the anionic hydrophilic group. The surfactant may have one or more, same or different anionic hydrophilic groups as hydrophilic groups, and may be an amphoteric surfactant that contains either one or both of a cationic hydrophilic group and a nonionic hydrophilic group in addition to an anionic hydrophilic group. Among them, an amphoteric surfactant is preferred since foam of good quality can be obtained by interaction with the surfactant (D).

Preferred examples of the surfactant (B) for use in the present invention include a fluorine-containing amino acid-type amphoteric surfactant (B-1), a fluorine-containing aminosulfonate-type surfactant (B-2), a fluorine-containing aminocarboxylate-type surfactant (B-3), a fluorine-containing trianion-type amphoteric surfactant (B-4), a fluorine-containing tricarboxylic acid-type amphoteric surfactant (B-5), a fluorine-containing sulfobetaine-type amphoteric surfactant (B-6), a fluorine-containing aminosulfate-type surfactant (B-7), a fluorine-containing sulphatobetaine-type surfactant (B-8), a fluorine-containing sulfobetaine-type surfactant (B-9), and a fluorine-containing amine oxide-type surfactant (B-10).

An example of the fluorine-containing amino acid-type amphoteric surfactant (B-1) is a surfactant represented by the following general formula (B-1) : 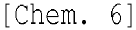 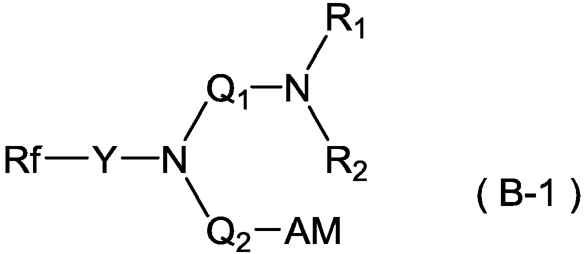 In the formula, Rf is a fluoroalkyl group having 3 to 6 carbon atoms to which a fluorine atom is directly bonded, Y is -SO₂- or -CO-, Q₁ and Q₂ are an organic divalent linking group, R₁ and R₂ are a hydrogen atom, an alkyl group having 1 to 12 carbon atoms, or an alkyl group substituted with a hydrophilic group, or R₁ and R₂ are bonded to each other to form a ring together with an adjacent nitrogen atom, A is an anionic hydrophilic group, and M is a hydrogen atom, an inorganic cation, or an organic cation.

Examples of the divalent linking groups represented by Q₁ and Q₂ in the general formula (B-1) include an aliphatic hydrocarbon group, an aliphatic hydrocarbon group substituted with a hydroxy group, an aromatic hydrocarbon group, and a substituted aromatic hydrocarbon group. Preferred examples of the linking groups include -(CH₂)ⱼ- [j is an integer of 1 to 6] or a group represented by the following structure: 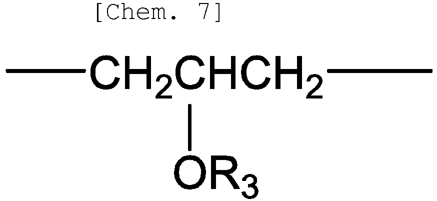 wherein R₃ is a hydrogen atom or an alkyl group having 1 to 3 carbon atoms.

Examples of anionic hydrophilic groups as A in the general formula (B-1) include -COO-, -SO₃-, -OSO₃-, and - OP(OH)O-.

Examples of inorganic cations and organic cations as M in the general formula (B-1) include Li⁺, Na⁺, K⁺, Ca⁺, Mg⁺, [N(H)ₛ(R)ₜ]⁺, wherein R is an alkyl group having 1 to 4 carbon atoms or a hydroxyalkyl group having 1 to 4 carbon atoms, and s and t are each an integer of 0 to 4 provided that s + t = 4, and a cation represented by the following structure.

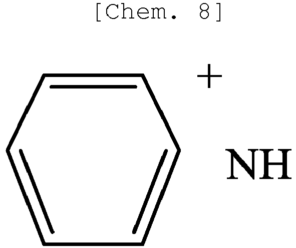

Specific examples of the fluorine-containing amino acid-type amphoteric surfactants represented by the general formula (B-1) are shown below.

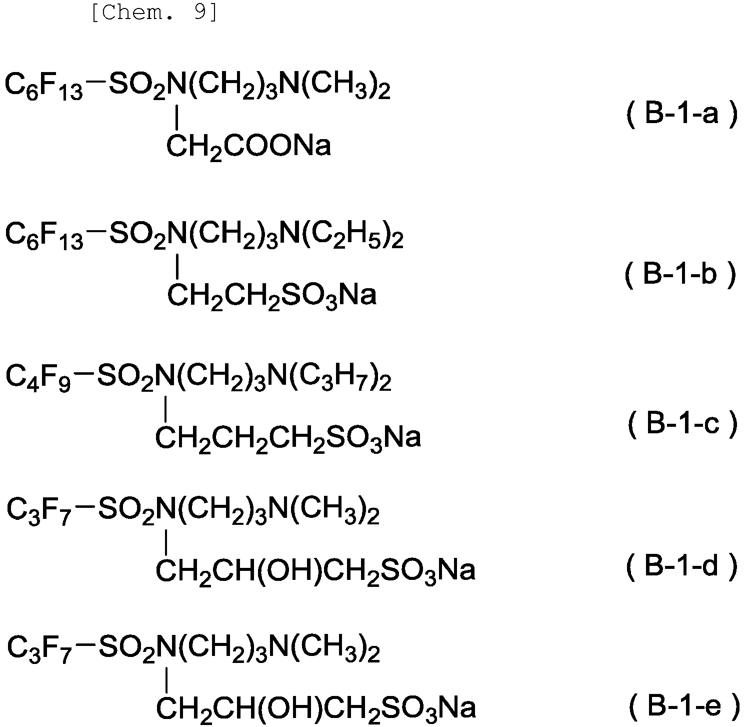

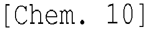

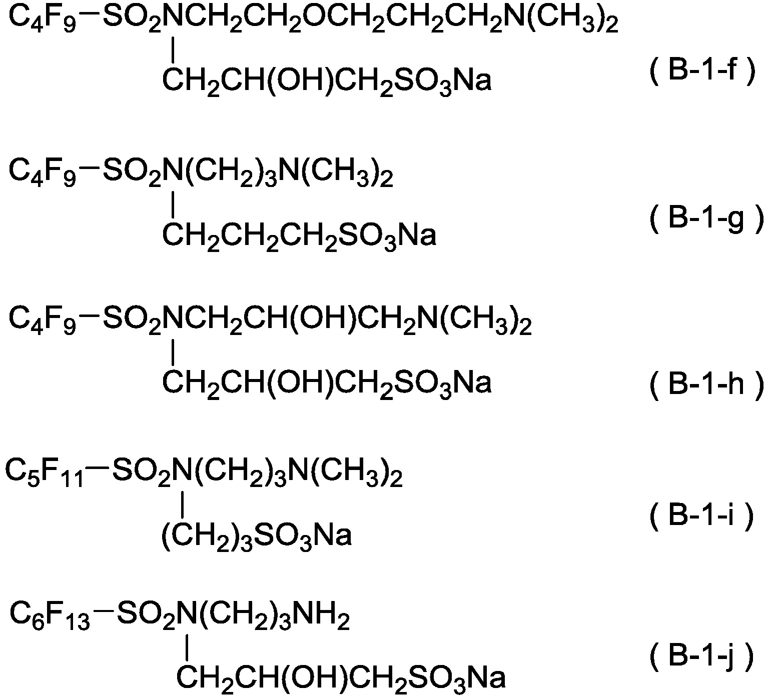

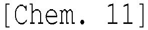

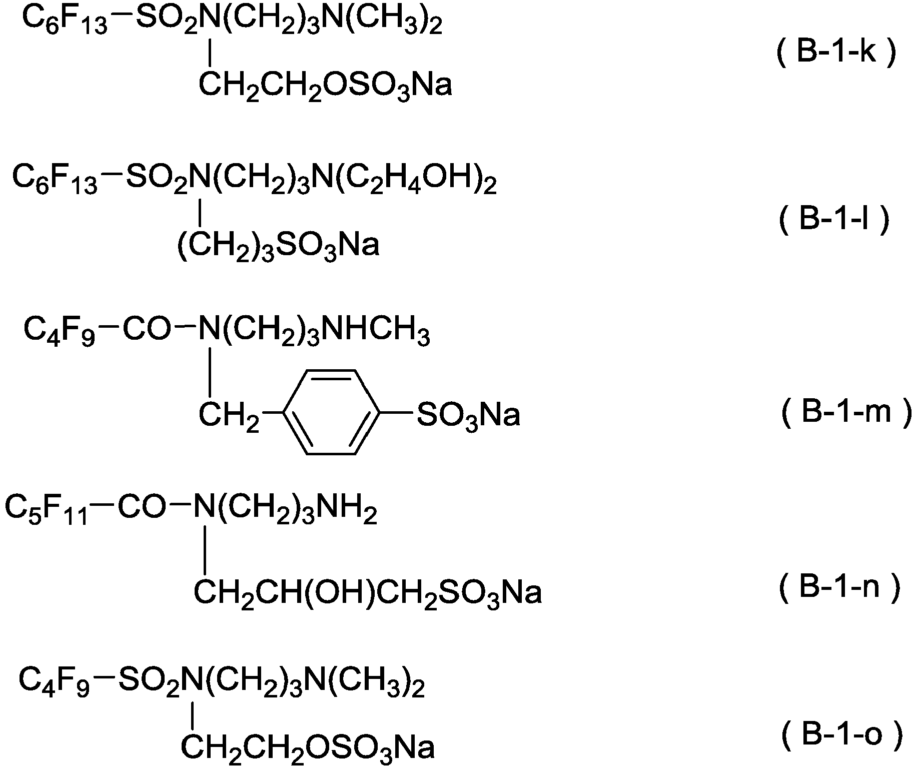

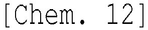

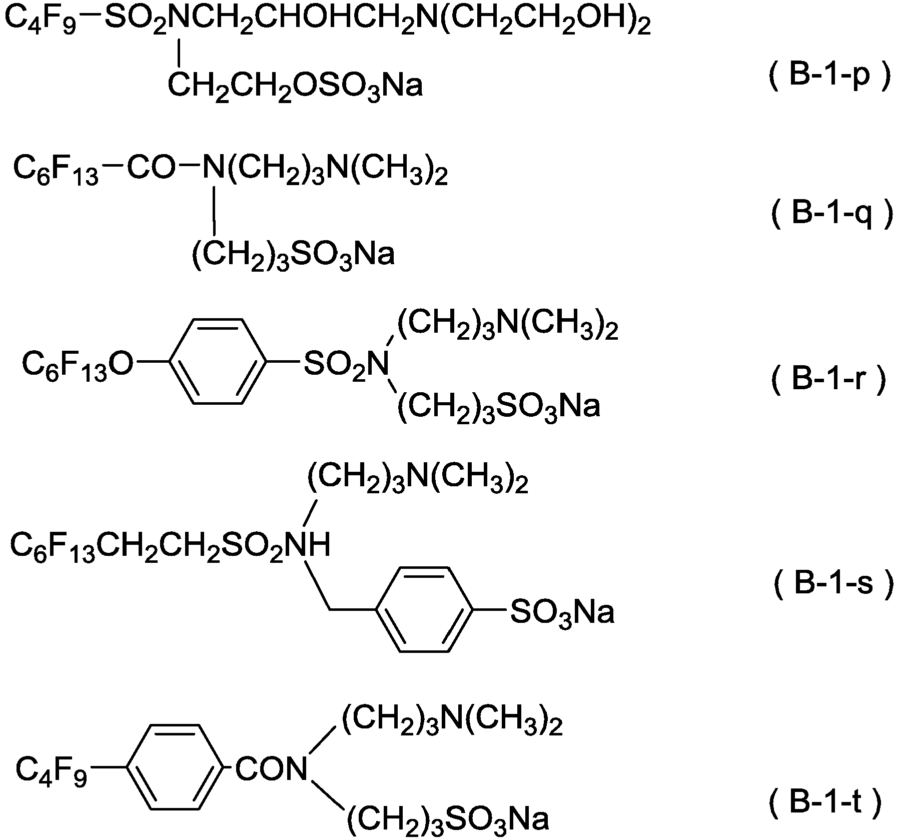

An example of the fluorine-containing aminosulfonate-type surfactant (B-2) is a surfactant represented by the following general formula (B-2):
[Chem. 13]

Rf-Z-Q₁-N(R)-N-Q₂-SO₂M (B-2)

In the formula, Rf is a fluoroalkyl group having 3 to 6 carbon atoms to which a fluorine atom is directly bonded, Z is a divalent linking group, Q₁ is -(CH₂)ⱼ- (wherein j is an integer of 1 to 6) or a group represented by the following structure: 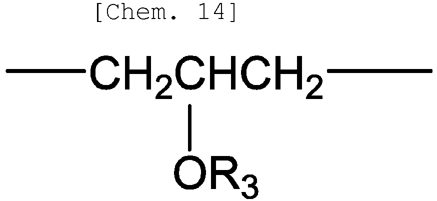 wherein R₃ is a hydrogen atom or an alkyl group having 1 to 3 carbon atoms, R is a hydrogen atom, an alkyl group having 1 to 3 carbon atoms, a hydroxyalkyl group having 1 to 3 carbon atoms, -Q₂SO₃M, or -(CH₂)ₖCOOM (wherein k is an integer of 1 to 4), Q₂ is -(CH₂)ₗ- (wherein 1 is an integer of 1 to 4), a group represented by the following structure: 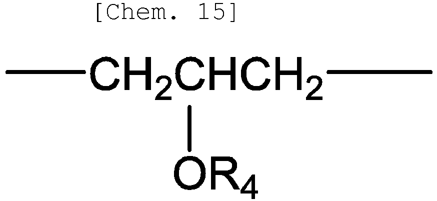 (wherein R₄ is an alkyl group having 2 to 3 carbon atoms), or a group represented by the following structure: 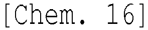 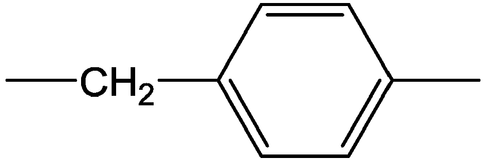 , and M is a cationic atom or atomic group.

Examples of the divalent linking groups represented by Z in the general formula (B-2) include -SO₂N(R₁)-, -CON(R₁)-, -(CH₂CH₂)ᵢSO₂N(R₁)-, and groups represented by the following structures:

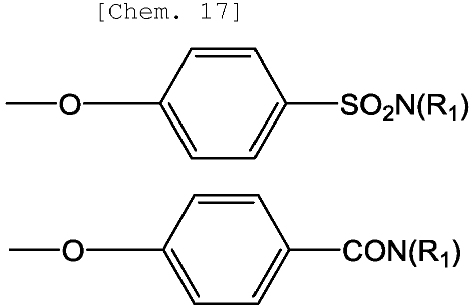

In the formulae, each R₁ is a hydrogen atom or an alkyl group having 1 to 12 carbon atoms and i is an integer of 1 to 10, or a group represented by the following structure: 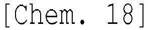 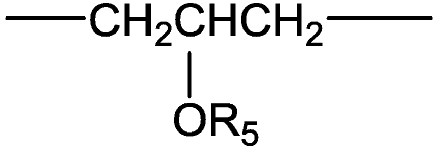 In the formula, R₅ is an alkyl group having 2 to 3 carbon atoms.

Examples of the cationic atoms or atomic groups represented by M in the general formula (B-2) include a hydrogen atom, an alkali metal, an alkaline earth metal, and -N(H)ₘ(R₅)ₙ (wherein R₅ represents an alkyl group having 1 to 3 carbon atoms or a hydroxyalkyl group, and m and n are each an integer of 0 to 4 provided that m + n = 4).

Specific examples of the fluorine-containing aminosulfonate-type surfactants represented by the general formula (B-2) are shown below.

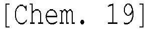

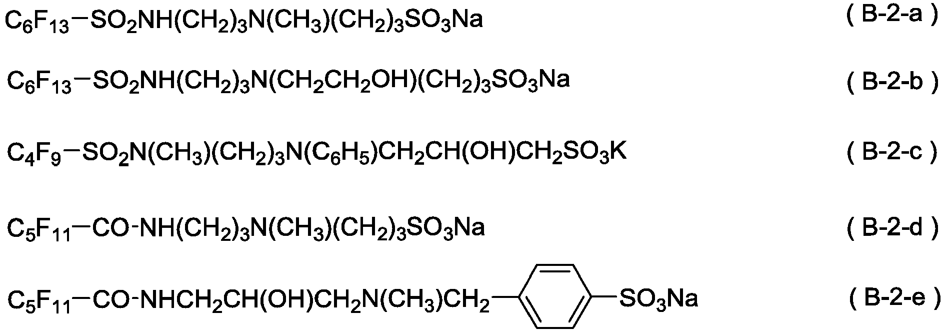

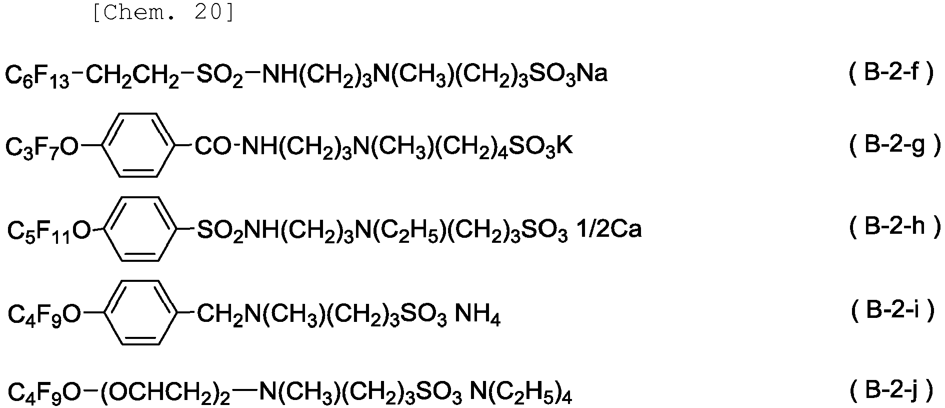

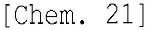

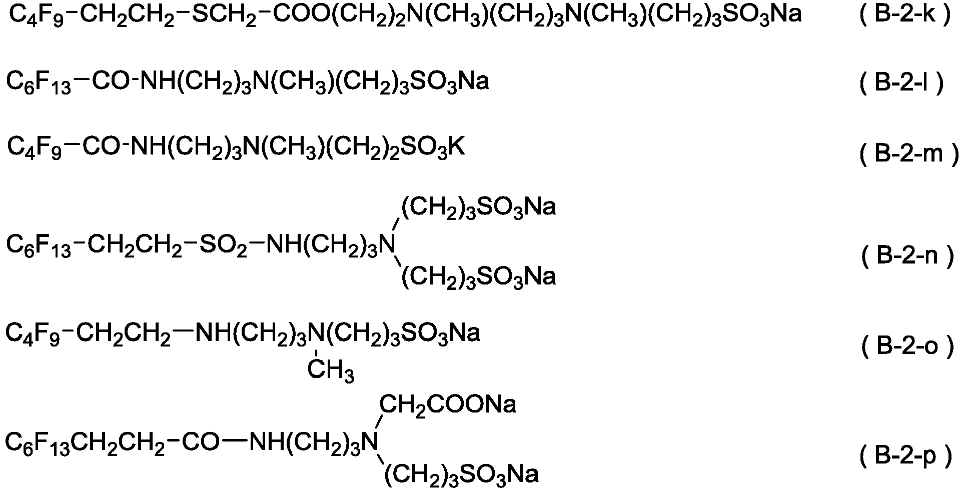

An example of the fluorine-containing aminocarboxylate-type surfactant (B-3) is a surfactant represented by the following general formula (B-3): 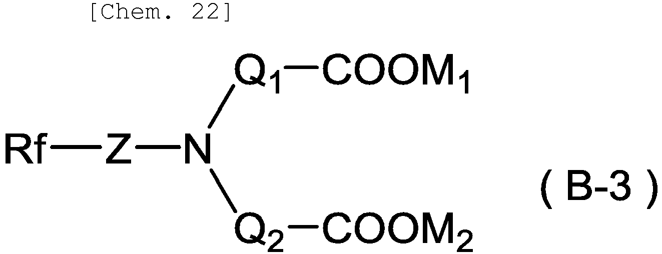 In the formula, Rf is a fluoroalkyl group having 3 to 6 carbon atoms to which a fluorine atom is directly bonded, Z is represented by the following structures: 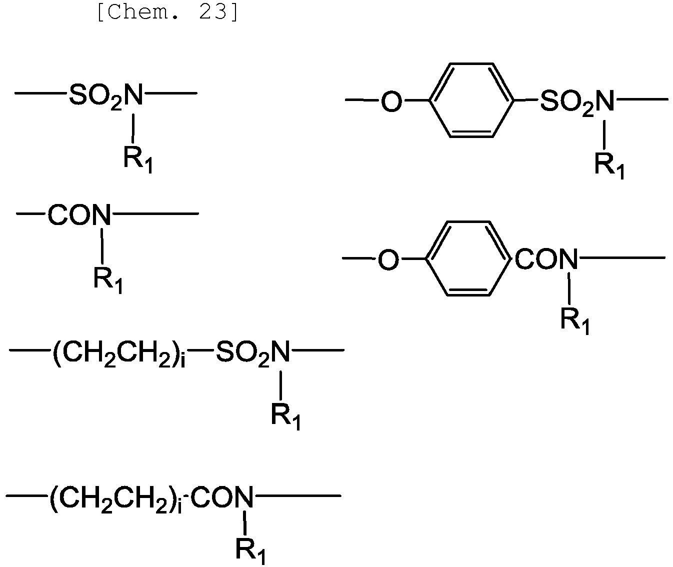 wherein R₁ is an alkyl group having 1 to 12 carbon atoms, an alkenyl group having 1 to 12 carbon atoms, a monovalent group containing an aromatic ring, or (CH₂CH₂)ⱼ-R₂ (wherein R₂ is a hydrogen atom or an alkyl group having 1 to 6 carbon atoms and j is an integer of 1 to 6), and i is an integer of 1 to 3, Q₁ and Q₂ are each -(CH₂)ᵣ- (wherein r is an integer of 1 to 3), and M₁ and M₂ are each a hydrogen atom, an inorganic cation, or an organic cation.

Examples of the inorganic cations or organic cations include the cations in (B-1) mentioned above.

Specific examples of the fluorine-containing aminocarboxylate-type surfactants represented by the general formula (B-3) are shown below.

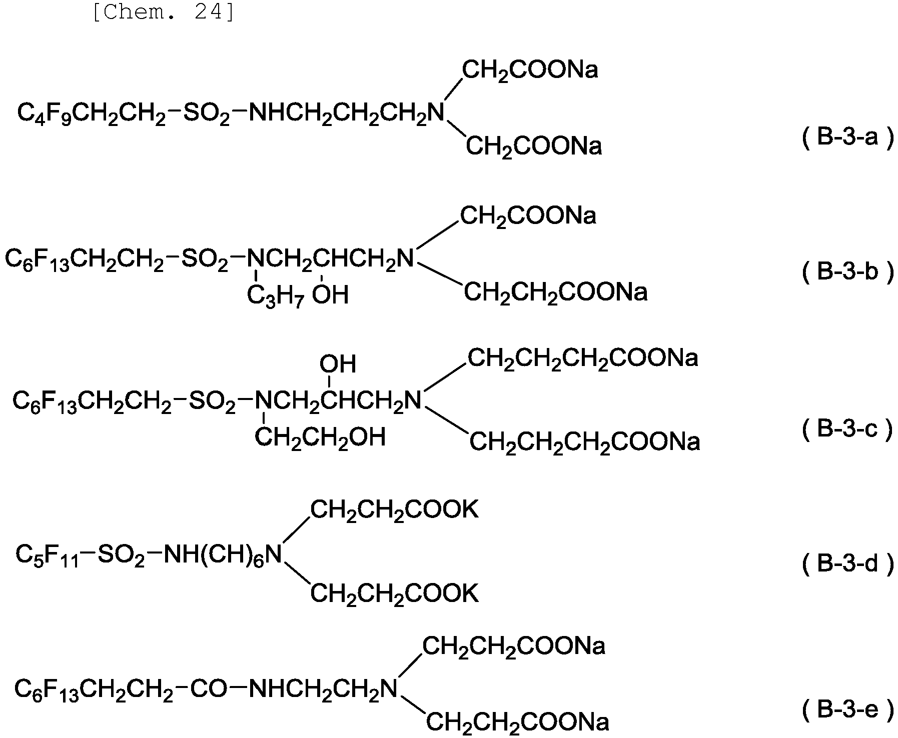

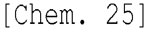

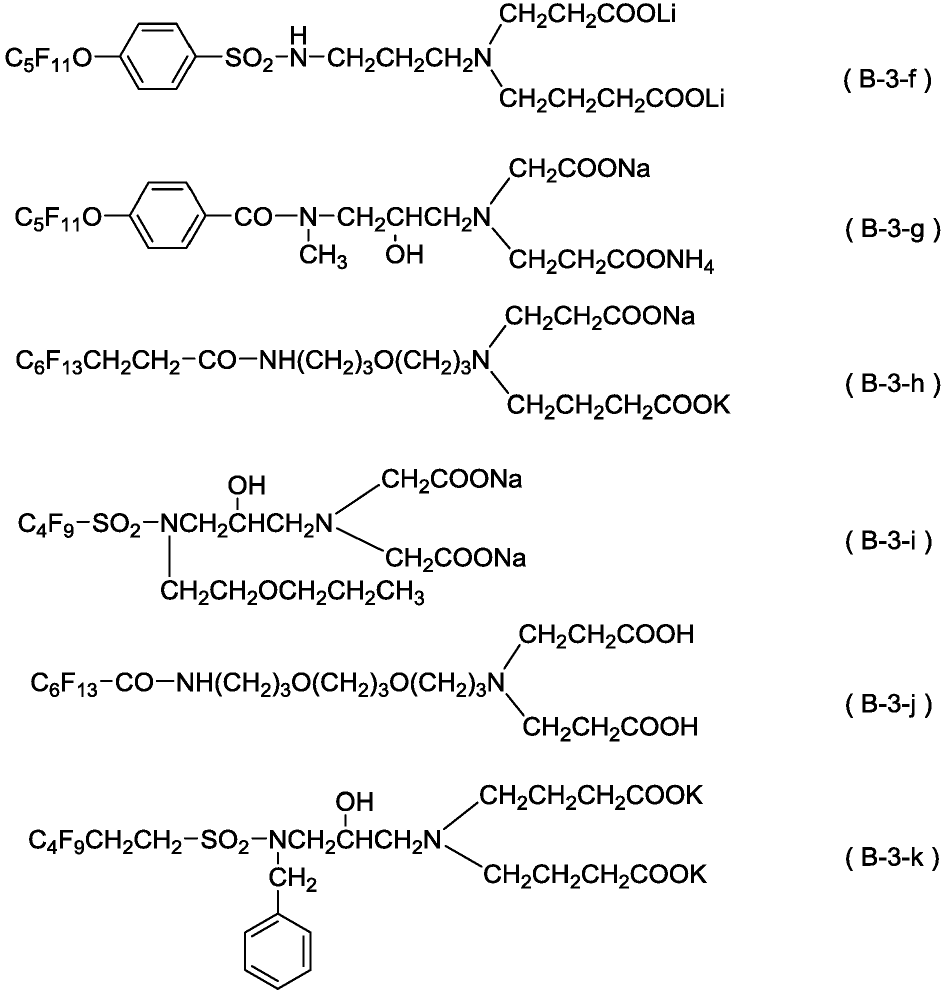

An example of the fluorine-containing trianion-type amphoteric surfactant (B-4) is a surfactant represented by the following general formula (B-4): 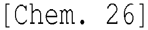 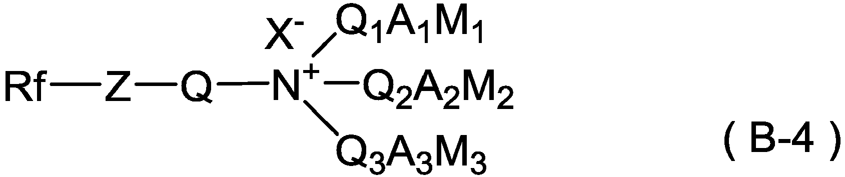 wherein Rf is a fluoroalkyl group having 3 to 6 carbon atoms to which a fluorine atom is directly bonded, Z is a divalent linking group, Q is -(CH₂)ₗ- (wherein 1 is an integer of 1 to 6) or a group represented by the following structure: 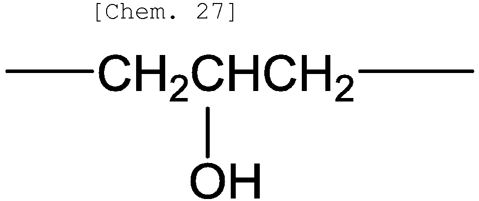 , -(CH₂)ₘ-O-(CH₂)ₙ- (wherein m and n are each an integer of 2 to 6), or (CH₂)ₚ-O-(CH₂)₂-O-(CH₂)_{q}- (wherein p and q are each 2 or 3), Q₁, Q₂, and Q₃ are each a divalent aliphatic hydrocarbon group having 1 to 8 carbon atoms, a divalent aliphatic hydrocarbon group having 1 to 8 carbon atoms substituted with a hydroxy group, or a group represented by the following structure: 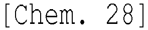 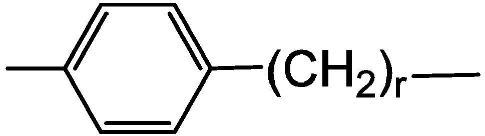 wherein r is 1 or 2, A₁ is -SO₃- or -OSO₃-, A₂ and A₃ are each -SO₃⁻, -OSO₃⁻, -COO⁻, or a group represented by the following structure: 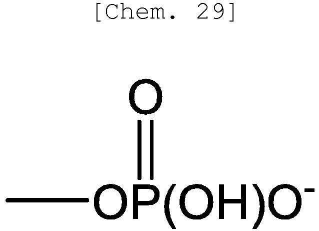 , M₁, M₂ and M₃ are each a hydrogen atom, an inorganic cation, or an organic cation, and X⁻ is an inorganic anion or an organic anion.

Examples of the divalent linking groups Z include - SO₂-NH-, -CO-NH-, and -CH₂-.

Examples of the inorganic anions or organic anions include OH⁻, Cl⁻, Br⁻, I⁻, ClO₄⁻, 1/2SO₄²⁻, CH₂SO₄⁻, NO₃⁻, CH₃COO⁻, and a phosphate group.

Examples of the inorganic cations or organic cations include the cations in (B-1) mentioned above.

Specific examples of the fluorine-containing trianion-type amphoteric surfactants represented by the general formula (B-4) are shown below.

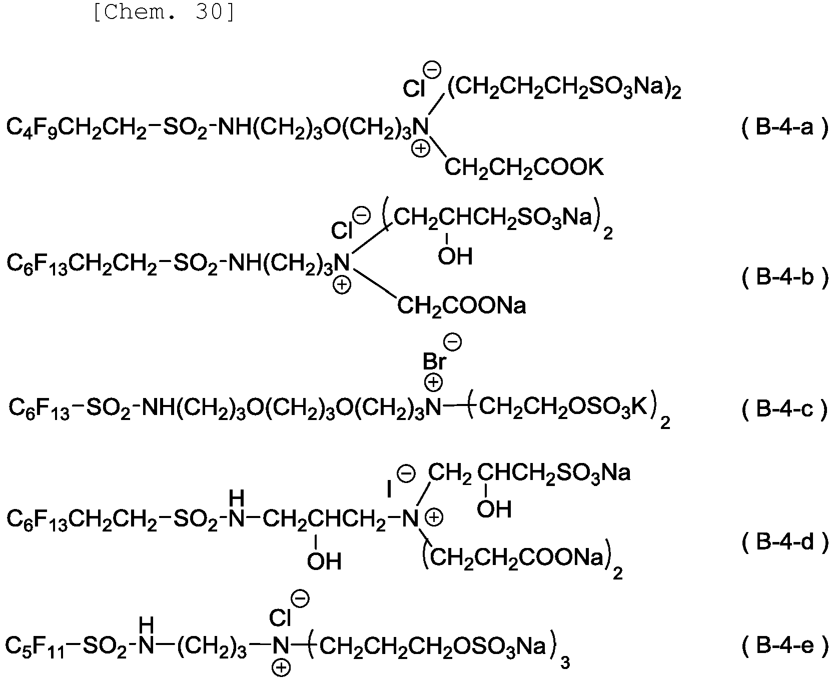

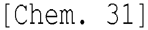

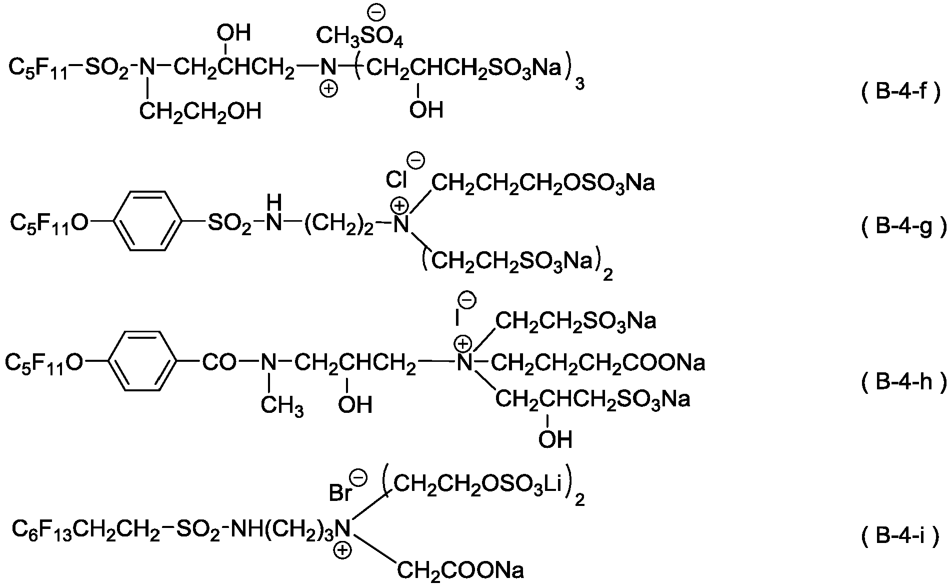

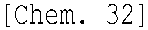

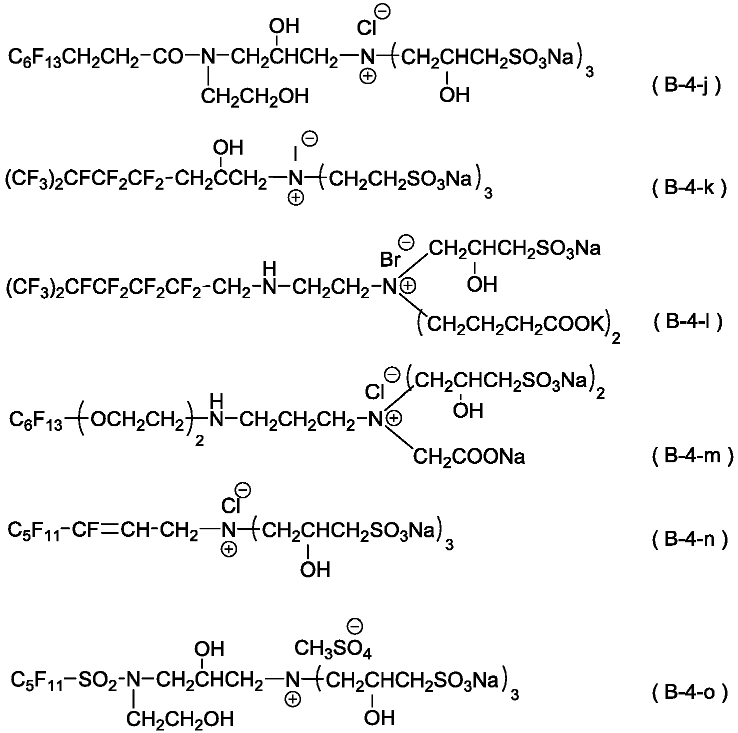

An example of the fluorine-containing tricarboxylic acid-type amphoteric surfactant (B-5) is a surfactant represented by the following general formula (B-4): 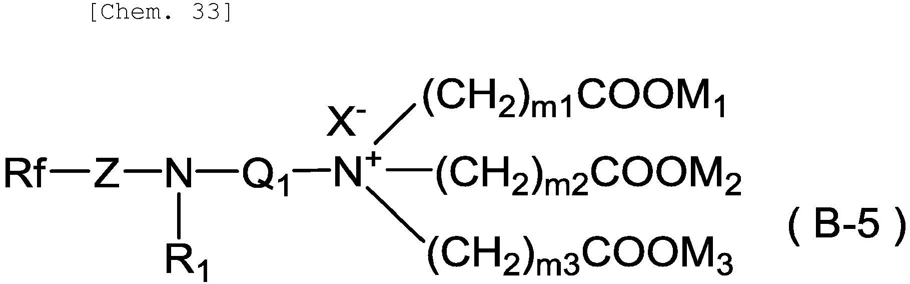 In the formula, Rf is a fluoroalkyl group having 3 to 6 carbon atoms to which a fluorine atom is directly bonded, Z is a divalent linking group, R₁ is a hydrogen atom, - CH₂CH₂OH, -(CH₂)ₐ-O-(CH₂)b-CH₃ (wherein a is an integer of 2 to 10 and b is an integer of 1 to 9), or an alkyl group having 1 to 12 carbon atoms, Q₁ is -(CH₂)ₙ- (wherein n is an integer of 2 to 6), -(CH₂)_{d}-O-(CH₂)ₑ- (wherein d and e are each an integer of 2 to 6), or a group represented by the following structure: 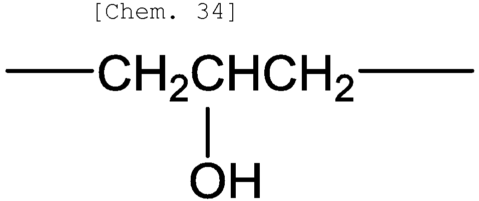 , X⁻ is an inorganic anion or an organic anion, m₁, m₂, and m₃ are each an integer of 1 to 3, and M₁, M₂ and M₃ are each a hydrogen atom, an inorganic cation, or an organic cation.

Examples of the divalent linking groups include -SO₂-, -CO-, -(CH₂)ₗ-SO₂-, and -(CH2)ₗ-CO- (wherein each 1 is an integer of 1 to 6), and groups represented by the following structures.

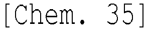

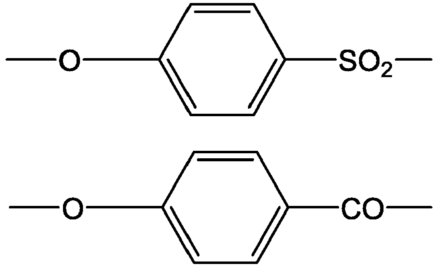

Examples of the inorganic anions or organic anions include the anions in (B-4) mentioned above. In addition, examples of the inorganic cations or organic cations include the cations in (B-1) mentioned above.

Specific examples of the fluorine-containing tricarboxylic acid-type amphoteric surfactants represented by the general formula (B-5) are shown below.

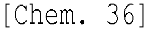

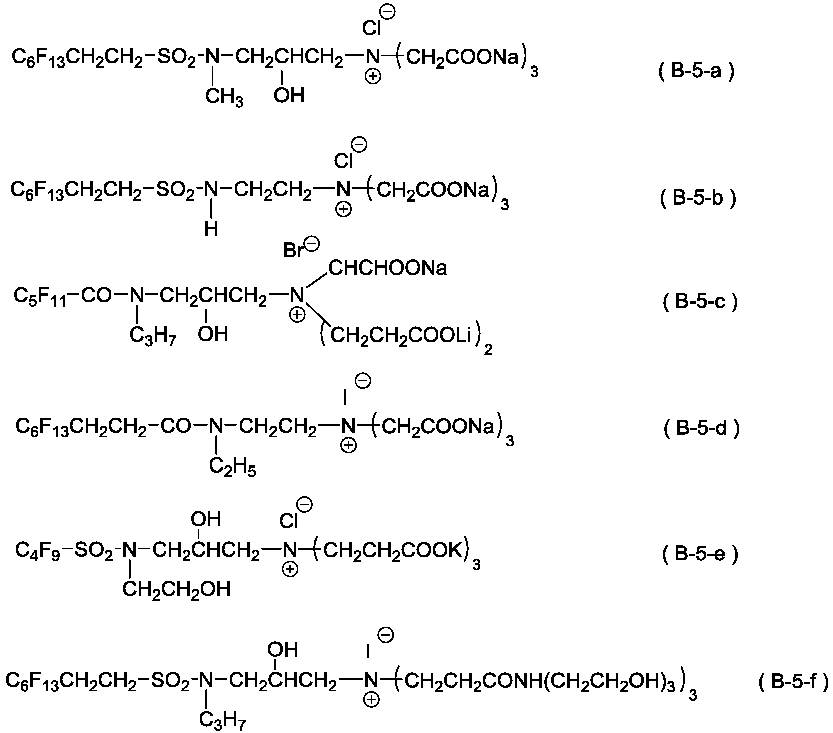

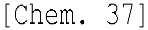

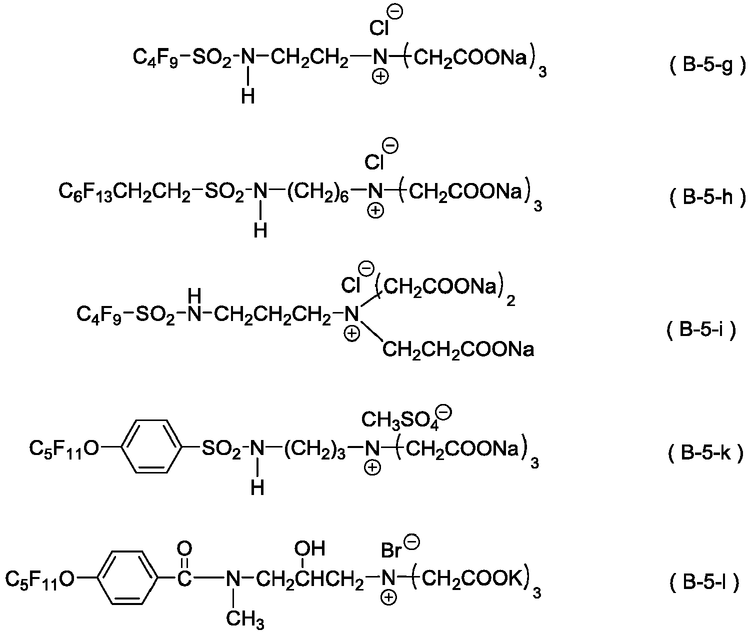

An example of the fluorine-containing sulfobetaine-type amphoteric surfactant (B-6) is the following general formula (B-6): 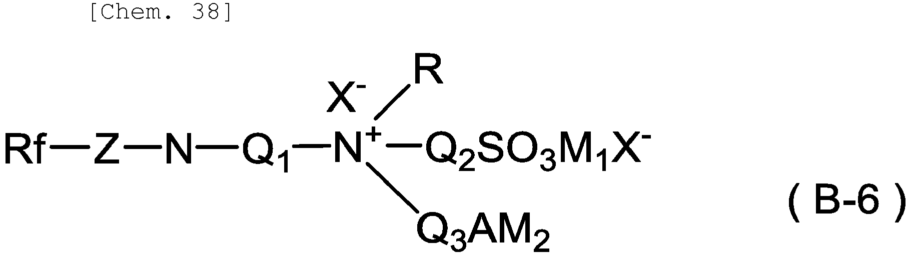 wherein Rf is a fluoroalkyl group having 3 to 6 carbon atoms to which a fluorine atom is directly bonded, Z is a divalent linking group containing a sulfoamide group or a carboamide group, Q₁, Q₂, and Q₃ are each a divalent aliphatic hydrocarbon group having 1 to 12 carbon atoms, or an aliphatic hydrocarbon group substituted with a hydroxy group, or an aromatic hydrocarbon group, R is a hydrogen atom, a hydrocarbyl group having 1 to 12 carbon atoms, -(CH₂CH₂O)ᵢH, or -(CH₂CH(CH₃)O)ᵢH (wherein each i is an integer of 1 to 20), A is -SO₃⁻, -OSO₃-, -COO⁻, or a group represented by the following structure: 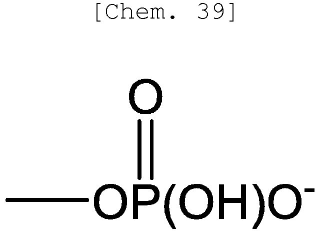 , M₁ and M₂ are each a hydrogen atom, an inorganic cation, or an organic cation, and X⁻ is an inorganic anion or an organic anion.

Examples of the divalent linking groups containing the sulfoamide group or carboamide group include -SO₂-NH- and - CO-NH-. Examples of the inorganic anions or organic anions include the anions in (B-4) mentioned above. In addition, examples of the inorganic cations or organic cations include the cations in (B-1) mentioned above.

Specific examples of the fluorine-containing sulfobetaine-type amphoteric surfactants represented by the general formula (B-6) are shown below.

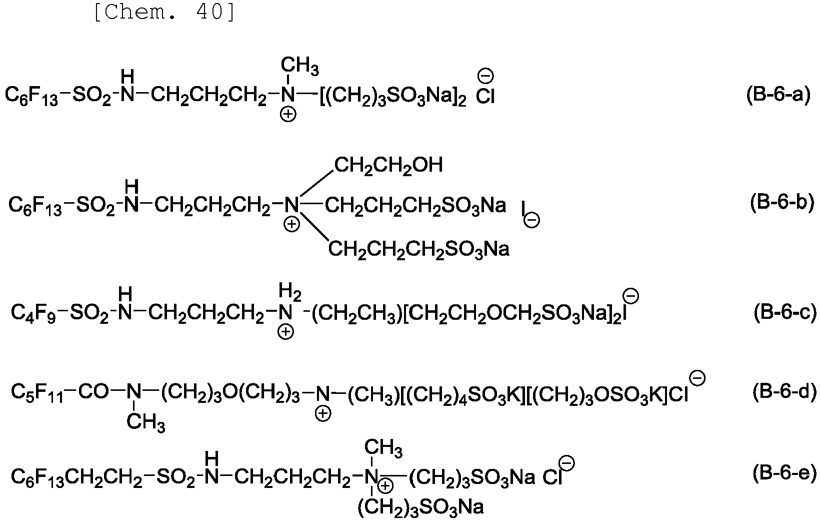

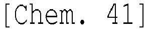

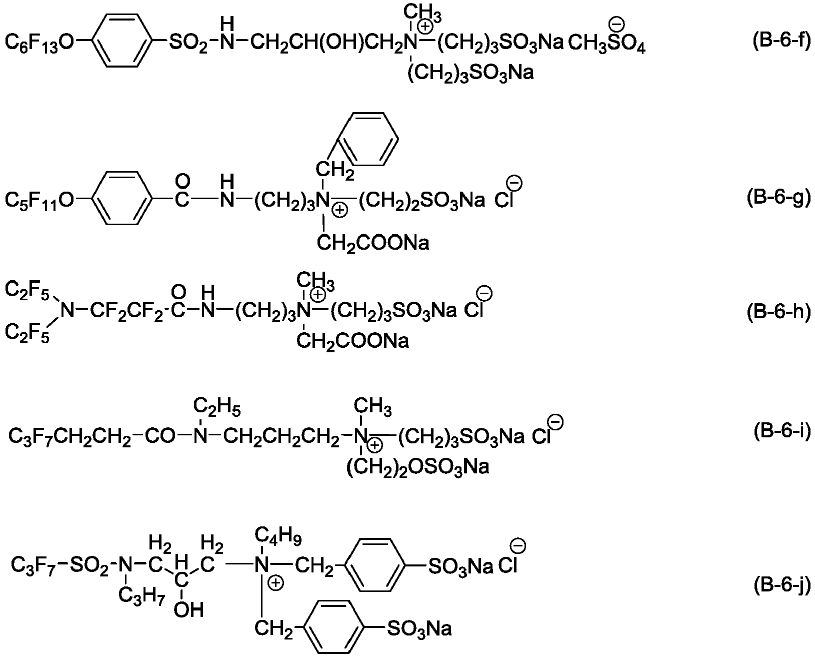

An example of the fluorine-containing aminosulfate-type surfactant (B-7) is a surfactant represented by the following general formula (B-7): 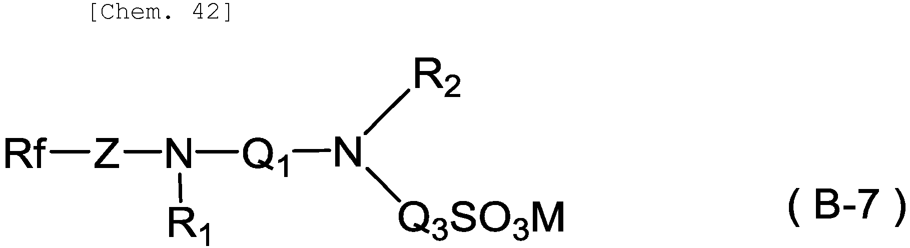 In the formula, Rf is a fluoroalkyl group having 3 to 6 carbon atoms to which a fluorine atom is directly bonded, Z is -SO₂-, -CO-, or linking groups represented by the following structures: 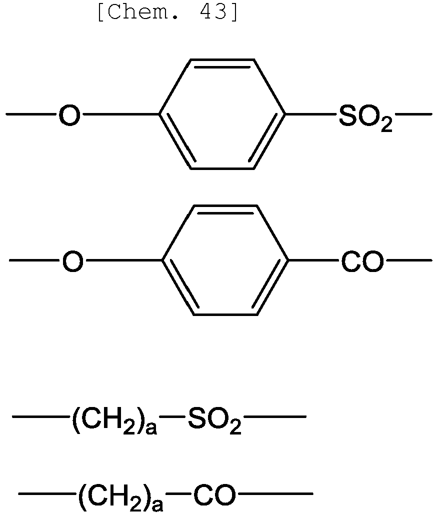 (wherein each a is an integer of 1 to 10), R₁ is a hydrogen atom, an alkyl group having 1 to 12 carbon atoms, or a group represented by -(CH₂)_{b}-OR₃ or -(CH₂CH₂O)_{d}-R₂ (wherein b is an integer of 1 to 10, d is an integer of 1 to 20, R₂ is a hydrogen atom, an alkyl group, alkenyl group, or hydroxy-substituted alkyl group having 1 to 18 carbon atoms, - (CH₂CH₂)ₘ-H (wherein m represents an integer of 2 to 20), and R₃ is an alkyl group having 1 to 12 carbon atoms or an alkoxy group having 1 to 12 carbon atoms), Q₁OSO₃M, Q₁SO₂M, or (CH₂)ᵢCOOM (wherein i is an integer of 1 to 4), each Q₁ is a divalent aliphatic hydrocarbon group having 1 to 12 carbon atoms or a divalent aliphatic hydrocarbon group substituted with a hydroxy group, or an aromatic hydrocarbon group, each M is a hydrogen atom, an inorganic cation, or an organic cation, and Q₃ is a group represented by -(CH₂)ⱼ- or - (CH₂CH₂O)ₖ-CH₂CH₂- (wherein j represents an integer of 2 to 12 and k represents an integer of 1 to 50).

Examples of the inorganic cations or organic cations include the cations in (B-1) mentioned above

Specific examples of the fluorine-containing aminosulfate-type surfactants represented by the general formula (B-7) are shown below.

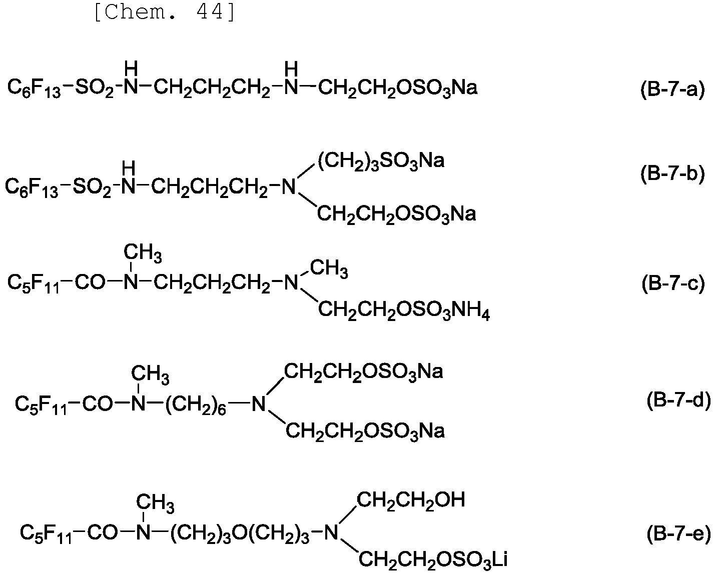

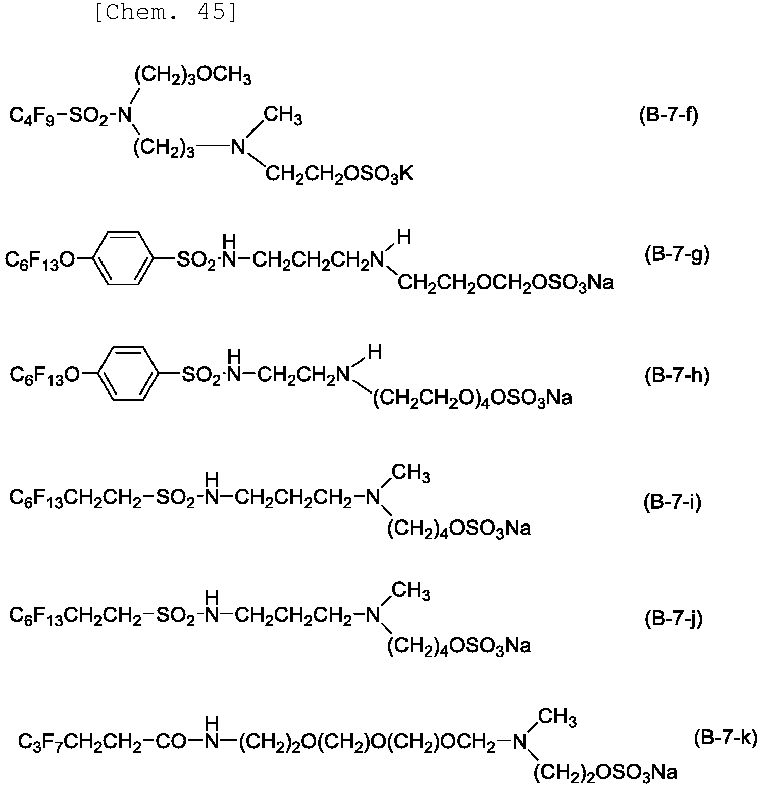

An example of the fluorine-containing sulphatobetaine-type surfactant (B-8) is a surfactant represented by the following general formula (B-8): 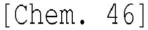 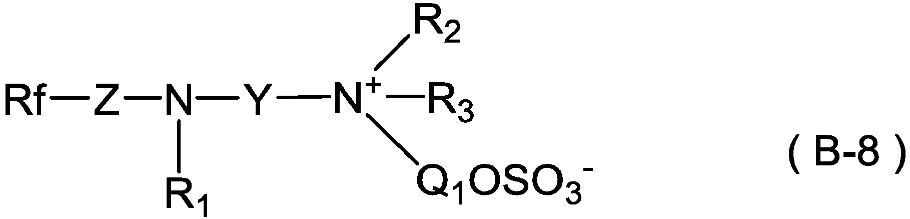 wherein Rf is a fluoroalkyl group having 3 to 6 carbon atoms to which a fluorine atom is directly bonded, Z is -SO₂-, - CO-, or divalent linking groups represented by the following structures: 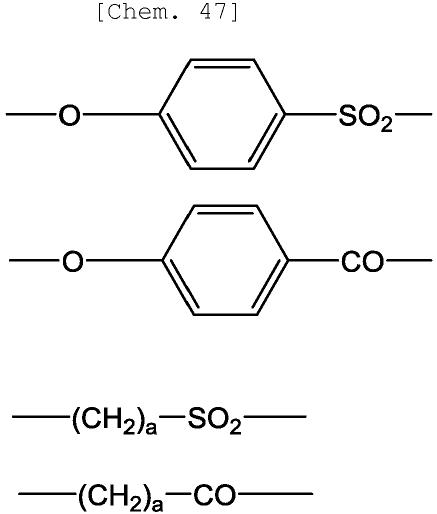 wherein each a is an integer of 1 to 10, R₁ is a hydrogen atom, an alkyl group having 1 to 12 carbon atoms, or a group represented by -(CH₂)_{b}-OR₃ or -(CH₂CH₂O)_{d}-R₂ (wherein b is an integer of 1 to 10 and d is an integer of 1 to 20), R₂ and R₃ are each an alkyl group, alkenyl group, hydroxy-substituted alkyl group, or aromatic-substituted alkyl group having 1 to 18 carbon atoms or a group represented by -(CH₂CH₂O)ᵢ-H (wherein i represents an integer of 2 to 20), or R₂ and R₃ are bonded to each other to form a cyclic structure together with the adjacent nitrogen atom, Y is a group represented by -(CH₂)ₑ-, -(CH₂)ₚ-O-(CH₂)₂-O-(CH₂)_{q}-, or -(CH₂)_{g}-O-(CH₂)ₕ (wherein e is an integer of 2 to 12, p and q are each 2 or 3, and g and h are each an integer of 1 to 6), Q₁ is a group represented by -(CH₂)ⱼ- (wherein j represents an integer of 2 to 12), the following structure: 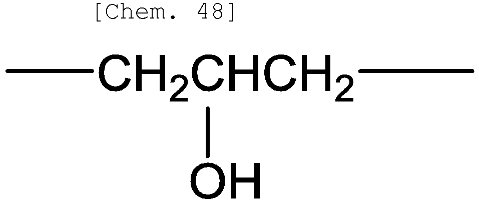 , or -(CH₂CH₂O)ₖ-CH₂CH₂- (wherein k represents an integer of 1 to 50).

Specific examples of the fluorine sulphatobetaine-type surfactants represented by the general formula (B-8) are shown below.

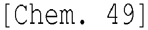

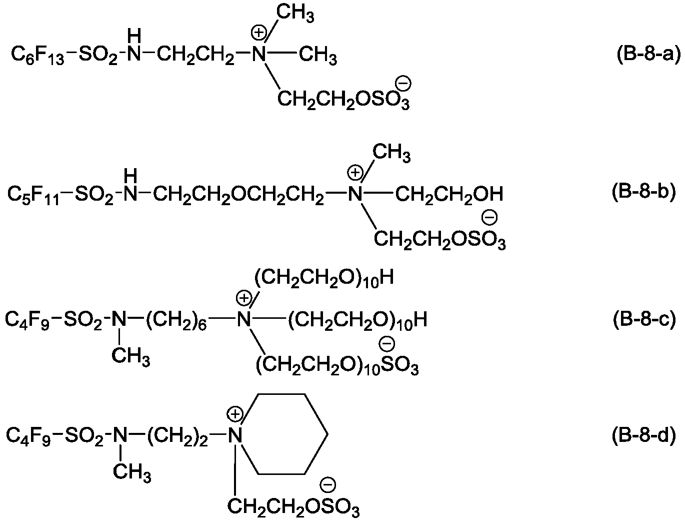

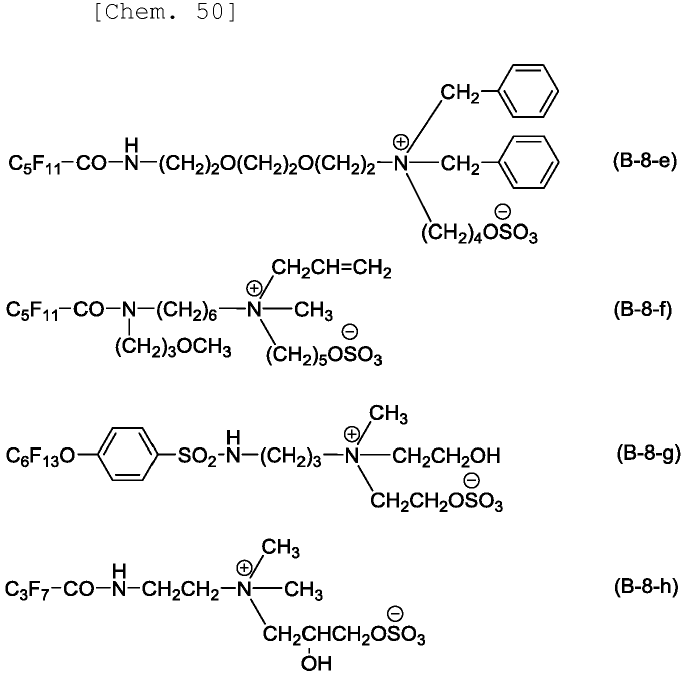

An example of the fluorine-containing sulfobetaine-type surfactant (B-9) is the following general formula (B-9) : 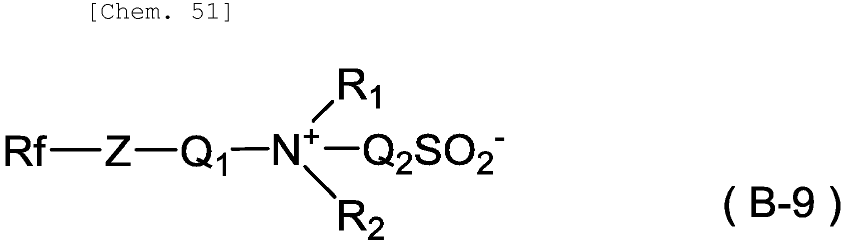 wherein Rf is a fluoroalkyl group having 3 to 6 carbon atoms to which a fluorine atom is directly bonded, Z is a divalent linking group, Q₁ is a group represented by -(CH₂)ₗ- (wherein 1 is an integer of 1 to 6), -(CH₂)ₘ-O-(CH₂)ₙ- (m and n are each an integer of 2 to 6), or -(CH₂)ₚ-O-(CH₂)₂-O-(CH₂)_{q}- (p and q are each 2 or 3), Q₂ is -(CH₂)ₗ- (wherein 1 is an integer of 1 to 6), -(CH₂CH₂O)ᵣ-CH₂CH₂- (wherein r is an integer of 1 to 3), or a group represented by the following structure: 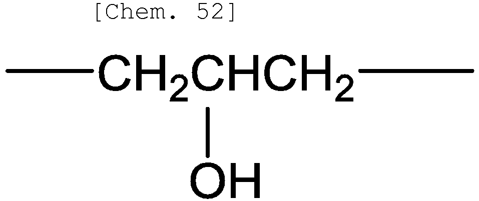 , R₁ and R₂ are each an alkyl group having 1 to 8 carbon atoms, an alkyl group having 1 to 3 carbon atoms and having an etheric oxygen, an alkenyl group having 1 to 8 carbon atoms, a benzyl group, or a group represented by -(CH₂CH₂O)ₛ-H (wherein s is an integer of 1 to 11).

Examples of the divalent linking groups include -SO₂-, -CO-, and linking groups represented by the following structures.

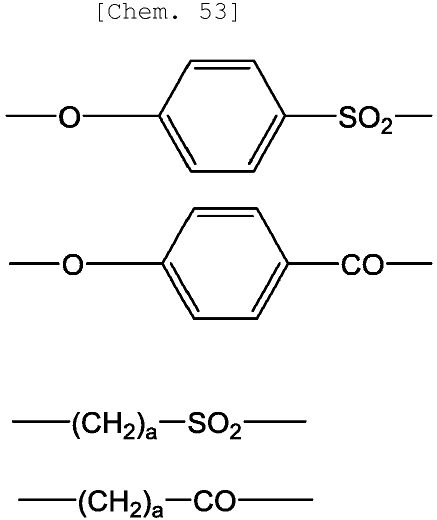

Specific examples of the fluorine-containing sulfobetaine-type surfactants represented by the general formula (B-9) are shown below.

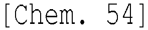

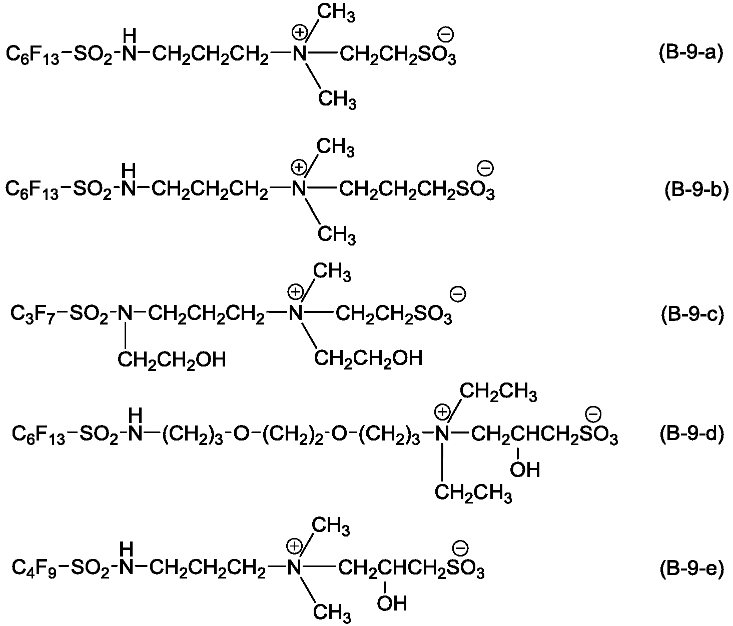

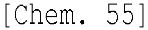

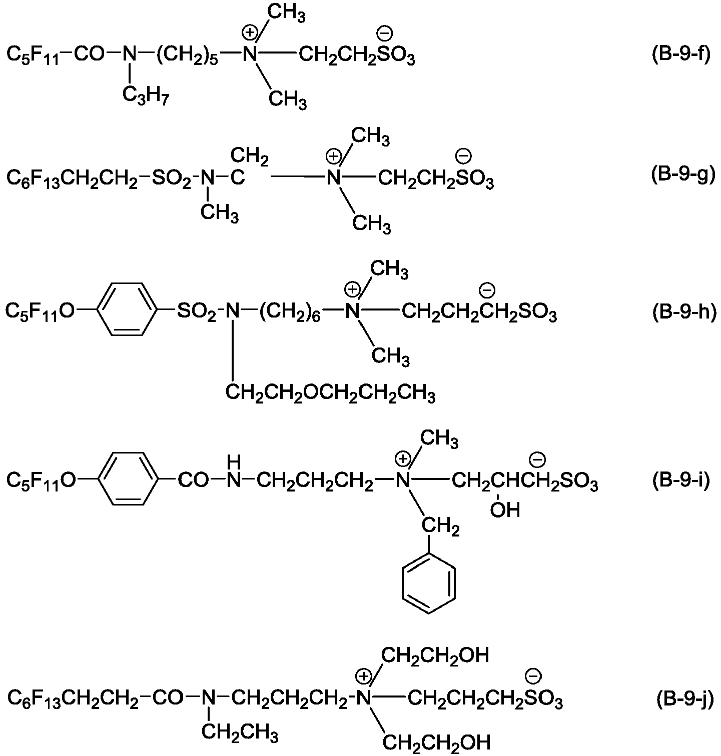

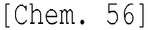

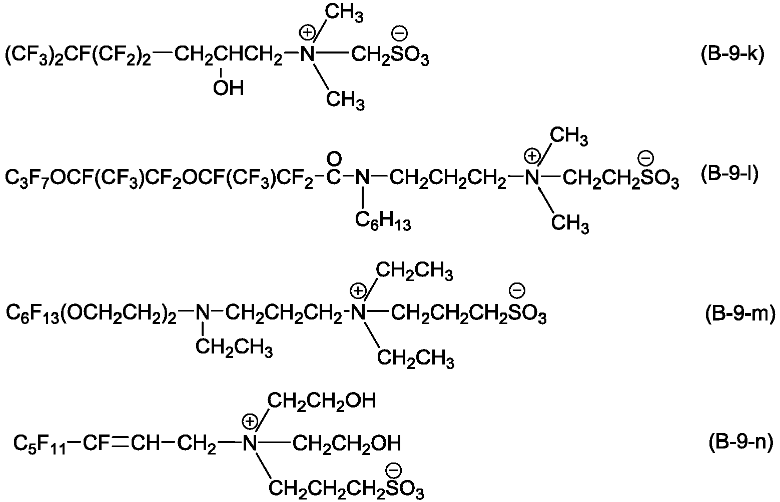

An example of the fluorine-containing amine oxide-type surfactant (B-10) is the following general formula (B-10): 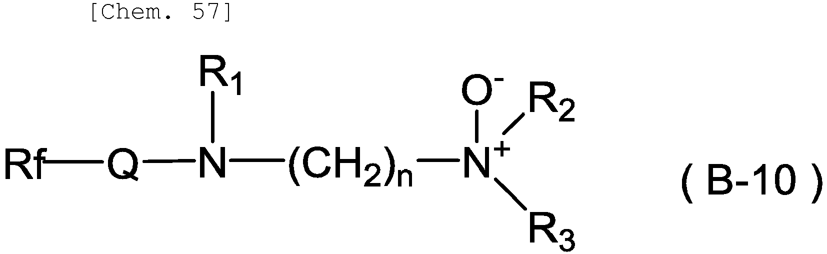 In the formula, Rf is a fluoroalkyl group having 3 to 6 carbon atoms to which a fluorine atom is directly bonded, Q is -SO₂- or -CO-, R₁ is a hydrogen atom, an alkyl group having 1 to 6 carbon atoms, a halogenated alkyl group having 1 to 6 carbon atoms, -OH, -SH, an alkoxy group having 1 to 6 carbon atoms, a thioalkyl group having 1 to 6 carbon atoms, -NO₂, -CN, or NRR'- (wherein R and R' are each a hydrogen atom or an alkyl group having 1 to 6 carbon atoms), R₂ and R₃ are each a hydrogen atom, an alkyl group having 1 to 6 carbon atoms, a halogenated alkyl group having 1 to 6 carbon atoms, -OH, -SH, an alkoxy group having 1 to 6 carbon atoms, a thioalkyl group having 1 to 6 carbon atoms, -NO₂, -CN, NRR'- (R and R' are each a hydrogen atom or an alkyl group having 1 to 6 carbon atoms), a cyclic aliphatic group containing a heteroatom, a cyclic aliphatic group containing no hetero atom, or a cyclic aliphatic group substituted with an alkyl group on all or a part of the aliphatic ring, and n is an integer of 2 to 6.

Specific examples of the fluorine-containing amine oxide-type surfactants represented by the general formula (B-10) are shown below.

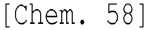

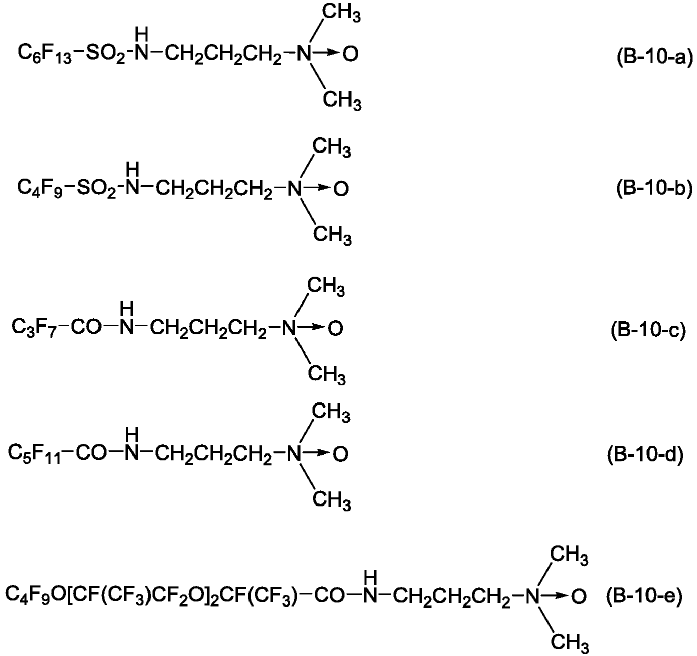

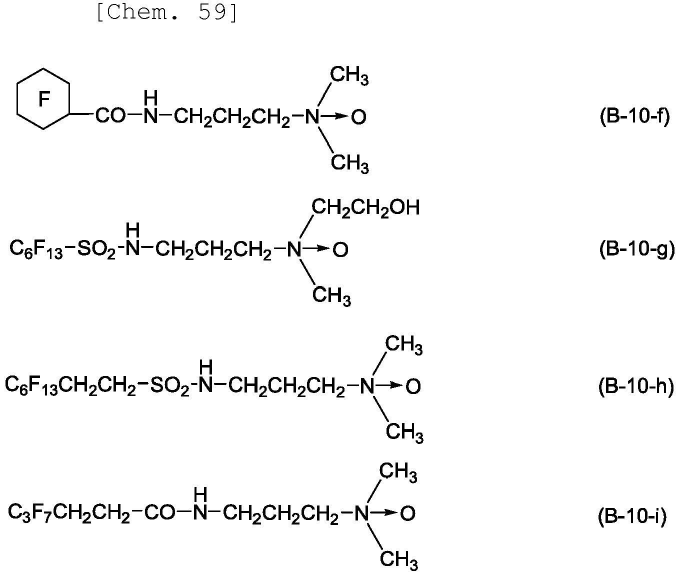

Among the surfactants represented by (B-1) to (B-10), one or more surfactants selected from the group consisting of (B-1), (B-2), (B-3), (B-4), and (B-5) are preferred since they are easily mixed with the cationic polyamine compound (A), the polybasic acid compound (C), and the surfactant (D) to give a uniform fire extinguishing agent.

Examples of the polybasic acid compounds (C) for use in the present invention include dibasic acids, tribasic acids, tetrabasic acids, pentabasic acids, and hexabasic acids having 3 to 24 carbon atoms and having an aromatic group, an aliphatic group, or a heteroring, and alkali metal salts and ammonium salts thereof. Examples of acid groups include a carboxylate group, a sulfonate group, and a phosphate group.

Specific examples of the polybasic acid compounds (C) for use in the present invention are shown below. 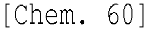 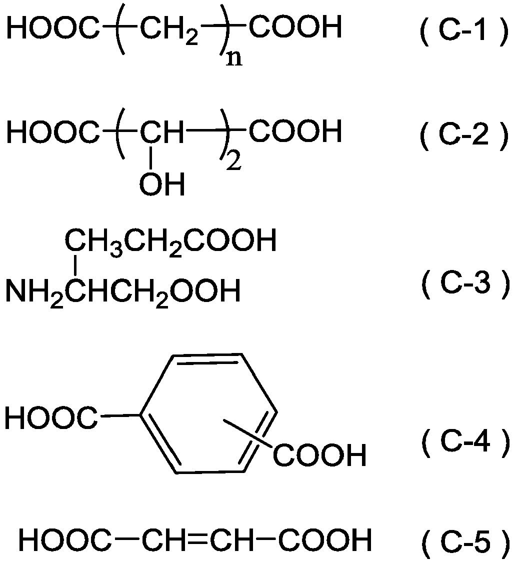 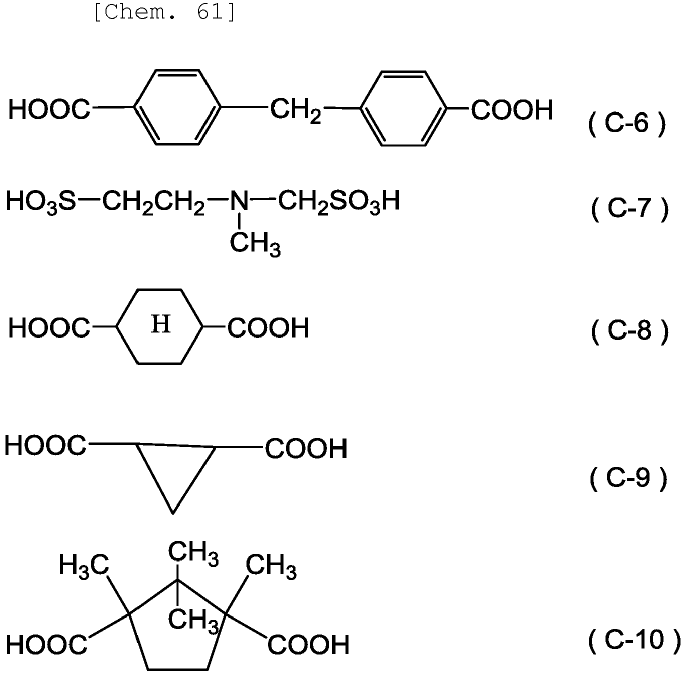 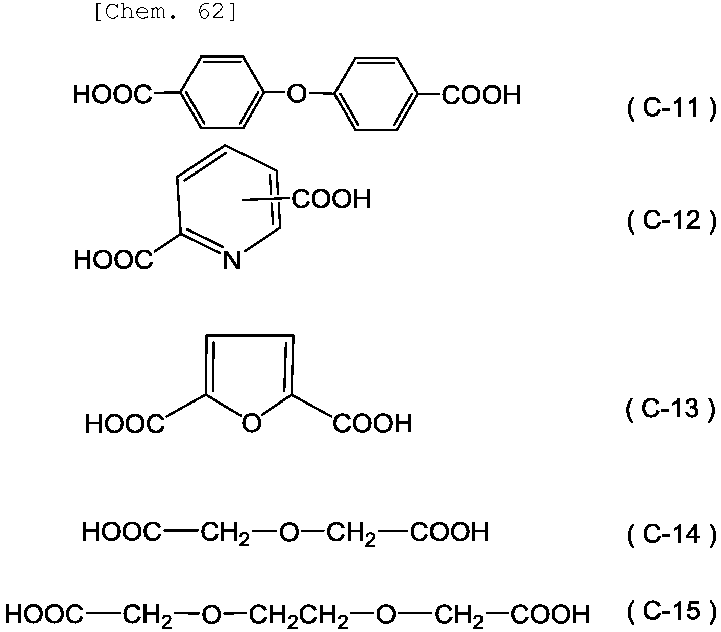 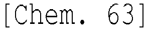 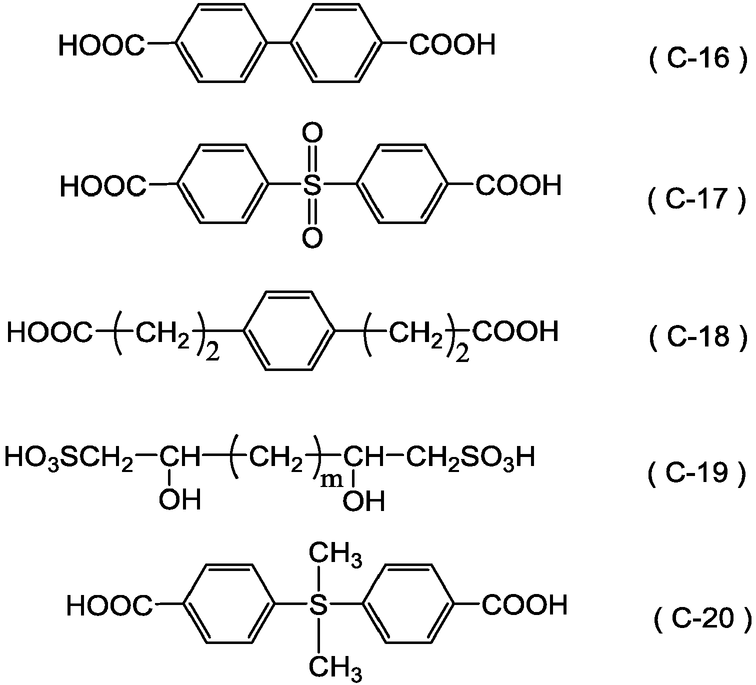 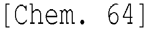 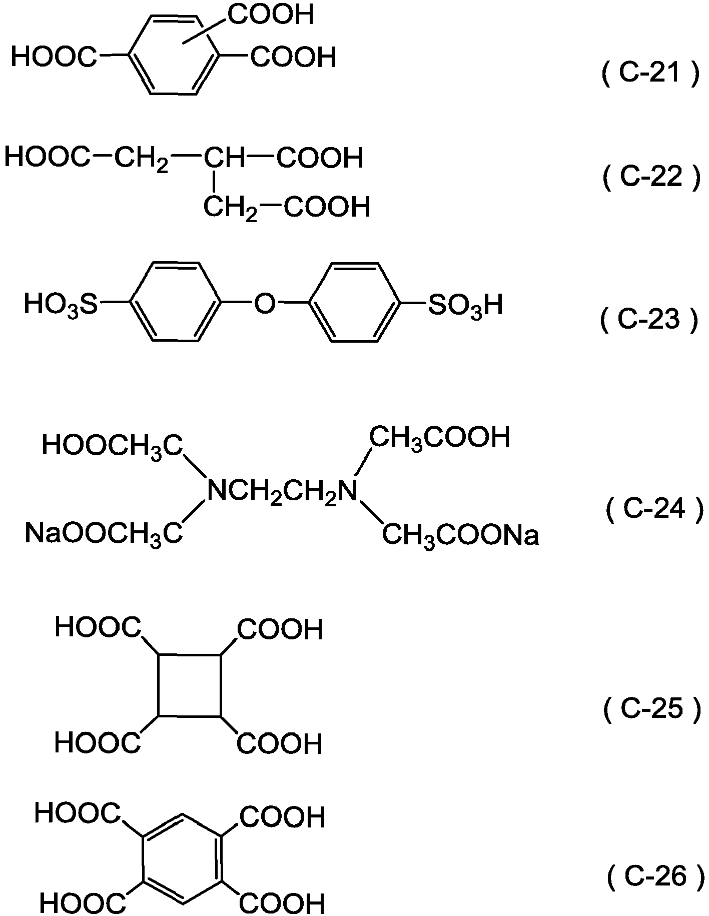 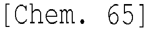 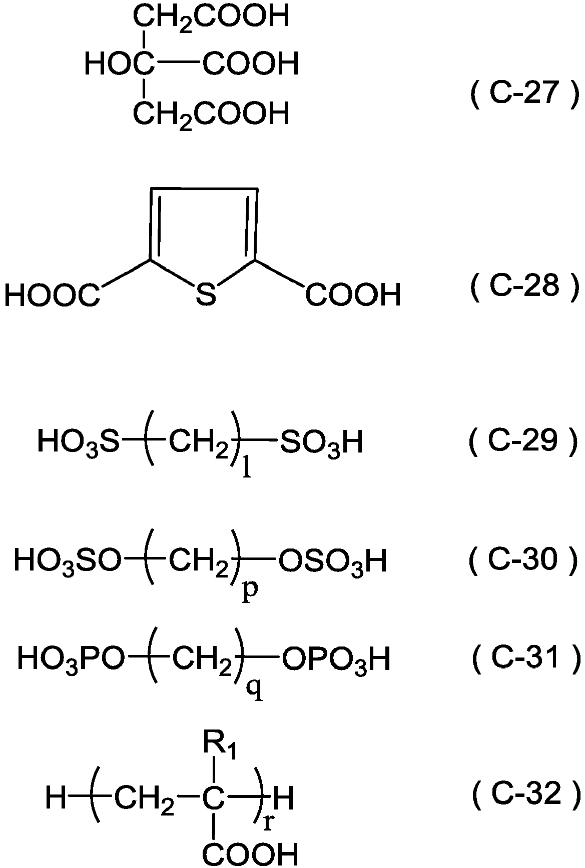 In the formulae, n in (C-1) is an integer of 2 to 16, m in the formula (C-19) is an integer of 2 to 16, 1 in (C-29) is an integer of 2 to 6, p in the formula (C-30) is an integer of 2 to 6, q in (C-31) is an integer of 2 to 6, and r in (C-32) is 2 to 6.

In addition, alkali metal salts, such as a Na salt, a K salt, and a Li salt, and ammonium salts of the compounds exemplified above can be used as the polybasic acid compound (C) .

Among the polybasic acid compound (C) for use in the present invention, a dibasic acid compound having 4 to 18 carbon atoms is preferred since compatibility with the cationic polyamine compound (A) is good, resulting in a uniform fire extinguishing agent, and a polybasic acid compound represented by (C-1) is more preferred. Among polybasic acid compounds represented by (C-1), an adipic acid in which n is 4 is preferred.

The mixing ratio of the cationic polyamine compound (A) and the polybasic acid compound (C) is preferably in the range of 5:1 to 1:3 since a fire extinguishing agent that hardly produce precipitation and is excellent in stability can be obtained, and more preferably 4:1 to 1:1.

In the present invention, the blending ratio [(B):[(A)+(C)]] (by mass) of the surfactant (B) and the total [(A)+(C)] of the cationic polyamine compound (A) and the polybasic acid compound (C) varies depending on the selected (A), (B), and (C), but is preferably in the range of 2:1 to 1:50 since a fire extinguishing agent that is excellent in foaming ability, is excellent in dissolution stability in both the states of a stock solution and diluted solutions and thus is excellent in long-term storability can be obtained, and more preferably 1:1 to 1:10. With a blending ratio [(B):[(A)+(C)]] in the above range, the kinematic viscosity of a stock solution of the fire extinguishing agent which is to be used in a diluted form at a final concentration of 3% by mass (a stock solution for dilution degree of 3%) can be 100 mm²/s or less at 20°C. Thus, such a fire extinguishing agent also has an effect of excellent practical handleability.

The surfactant (D) for use in the present invention has a structure represented by the following general formulae (D1) to (D5): 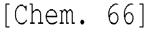 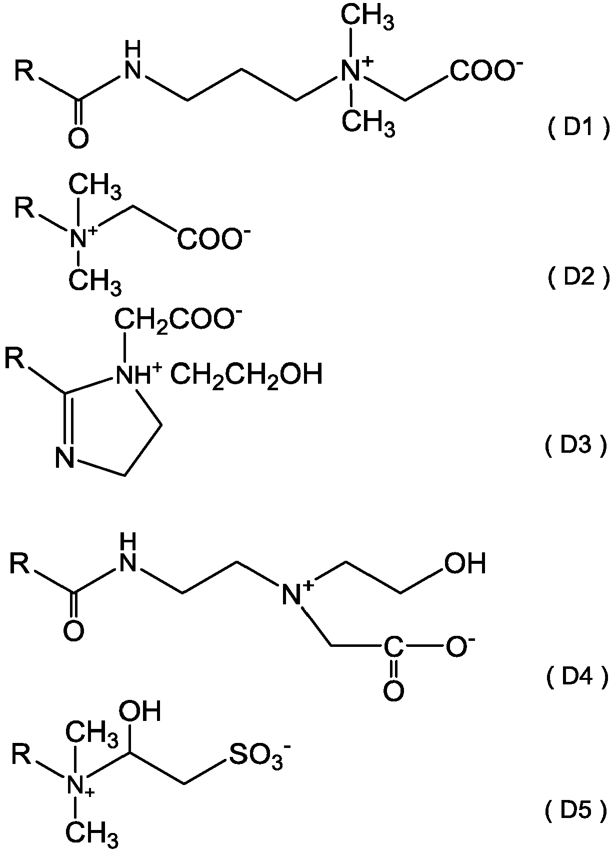 In the formulae, R represents a hydrocarbon group having 7 to 18 carbon atoms.

Examples of hydrocarbon groups having 7 to 18 carbon atoms as R include linear saturated hydrocarbon groups and unsaturated hydrocarbon groups.

Examples of the linear saturated hydrocarbon groups include C₇H₁₅-, C₉H₁₇-, C₁₁H₂₃-, C₁₃H₂₇, and C₁₇H₃₃-. Examples of the unsaturated hydrocarbon groups include unsaturated hydrocarbon groups derived from palmitoleic acid, oleic acid, linoleic acid, and eleostearic acid. A mixture such as a coconut oil-derived fatty acid may be used as a fatty acid corresponding to the hydrocarbon group.

Examples of the surfactants represented by the general formula (D1) include compounds having the following structures.

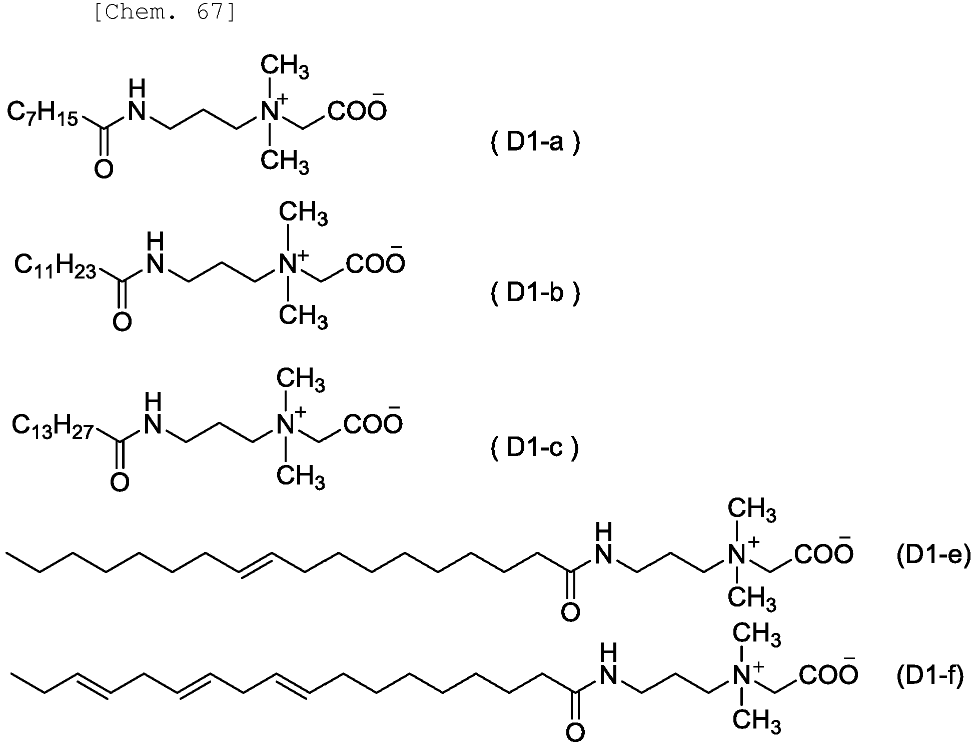

Examples of the surfactants represented by the general formula (D2) include compounds having the following structures.

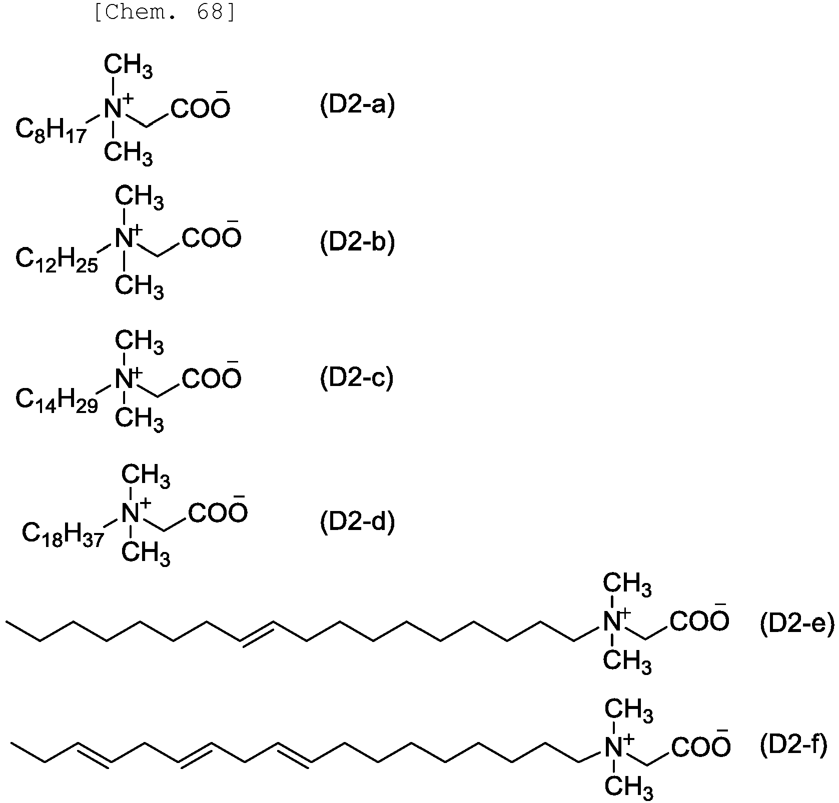

Examples of the surfactants represented by the general formula (D3) include compounds having the following structures.

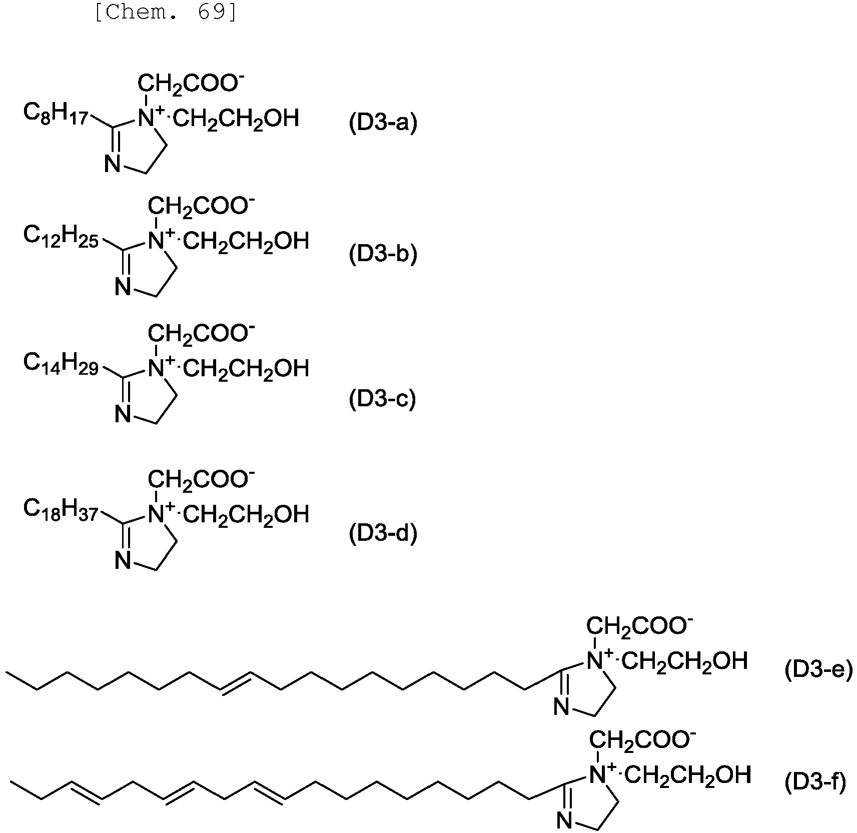

Examples of the surfactants represented by the general formula (D4) include compounds having the following structures.

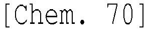

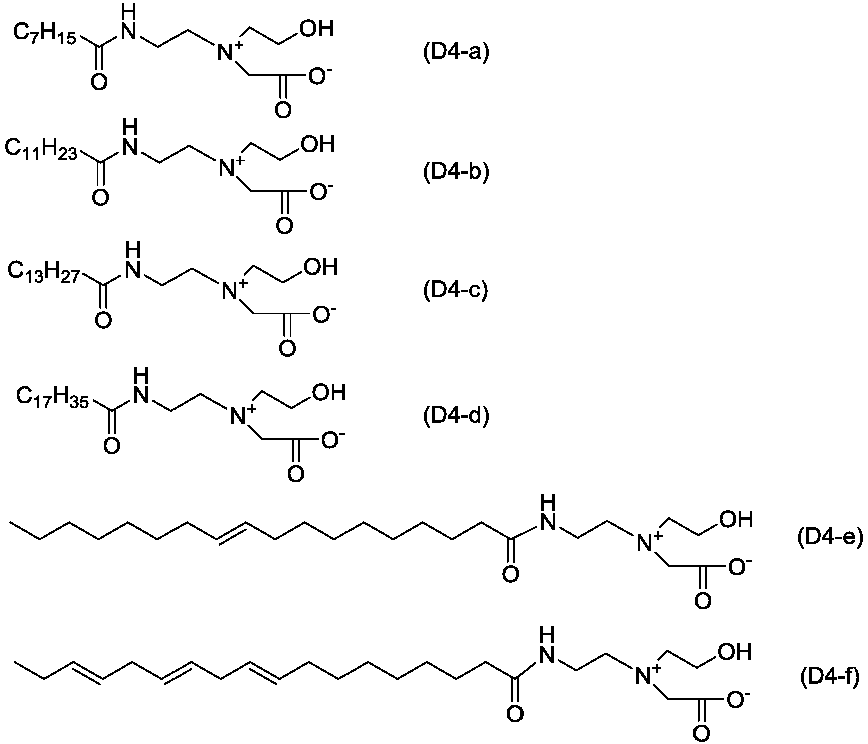

Examples of the surfactants represented by the general formula (D5) include compounds having the following structures.

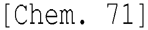

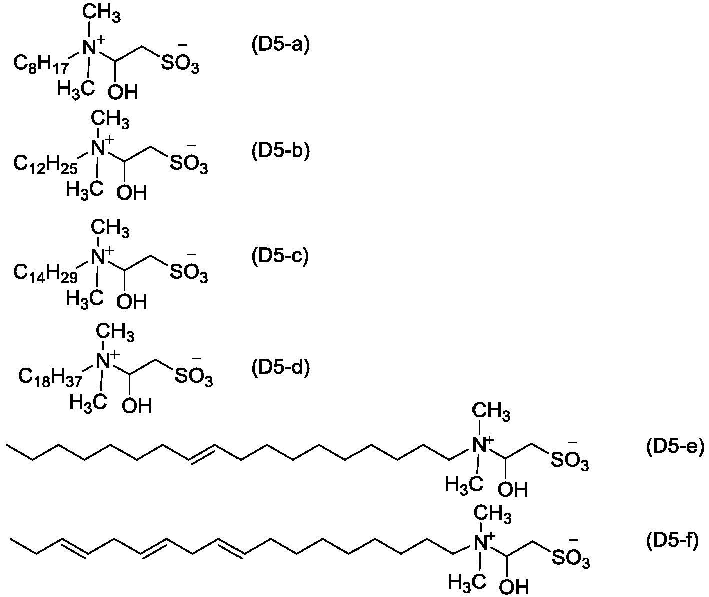

Among the surfactants (D) for use in the present invention, since it is excellent in compatibility with the cationic polyamine compound (A) to easily provide a uniform fire extinguishing agent, a surfactant represented by the general formula (D1) or the general formula (D2) is preferred, and one or more selected from the group consisting of surfactants represented by (D1-a), (D1-b), (D1-c), and (D2-b) are more preferred.

The content of the surfactant (D) in the fire extinguishing agent of the present invention is preferably 0.5 to 10% by mass and more preferably 1 to 6% by mass based on the total mass of the cationic polyamine compound (A), the surfactant (B), the polybasic acid compound (C), and the surfactant (D) since a fire extinguishing agent excellent in foaming ability can be obtained.

The fire extinguishing agent of the present invention can contain various additives, such as a surfactant other than the surfactant (B) and the surfactant (D), an additional foam stabilizer, a freezing point depressor, an antirust agent, and a pH modifier, to the extent that the effect of the present invention is not impaired.

An example of the surfactant other than the surfactant (B) and the surfactant (D) is a surfactant (E) having a cationic hydrophilic group. When the fire extinguishing agent of the present invention contains the surfactant (E), an action of effectively reducing the surface tension of an aqueous solution of the fire extinguishing agent and the interface tension thereof with respect to oil can be imparted, resulting in improved fire-extinguishing performance on a non-polar solvent such as petroleum.

Examples of the cationic hydrophilic groups in the cationic hydrophilic group-containing surfactant (E) include pyridinium salts, quarternary ammonium salts, imidazolinium salts, and benzalkonium salts. Among them, groups of pyridinium salts and quarternary ammonium salts are preferred in terms of the compatibility, and a quarternary ammonium salt is more preferred.

The counter ion of the cationic group is an organic or inorganic anion. In addition, examples of the hydrophobic groups of the surfactant (E) include an alkyl group having 6 or more carbon atoms, a dihydrocarbyl siloxane chain, and a fluoroalkyl group having 3 to 6 carbon atoms to which a fluorine atom is directly bonded. Above all, a surfactant having a fluoroalkyl group is preferred since the fire-extinguishing performance is increased. Examples of surfactants having a fluoroalkyl group and a cationic hydrophilic group include surfactants represented by the following general formula (E-1): 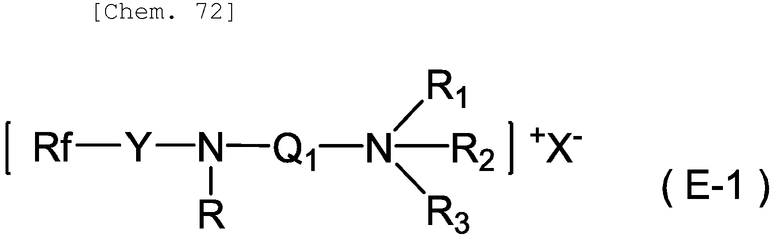 In the formula, Rf is a fluoroalkyl group having 3 to 6 carbon atoms to which a fluorine atom is directly bonded, Y is -(CH₂CH₂)ᵢ-, -CH₂CH₂SCH₂COO-, -(CH₂CH₂)ᵢ-SO₂-, -(CH₂CH₂)ᵢ-CO- (wherein each i is an integer of 1 to 6), or a group represented by the following structure: 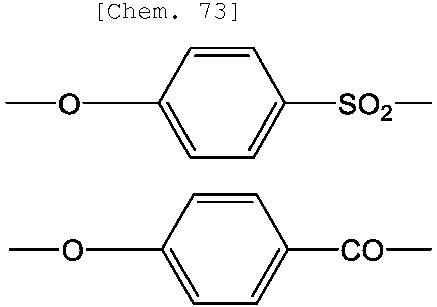 , R is a hydrogen atom or a alkyl group having 1 to 6 carbon atoms, Q₁ is a divalent aliphatic hydrocarbon group, a divalent aliphatic hydrocarbon group substituted with a hydroxy group, an aromatic hydrocarbon group, or a substituted aromatic hydrocarbon group, and preferably - (CH₂)ⱼ- (wherein j is an integer of 1 to 6), R₁ to R₃ may be the same or different and are a hydrogen atom or an alkyl group having 1 to 6 carbon atoms, and X⁻ is an organic or inorganic anion.

The additional foam stabilizer is added mainly for adjusting the expansion ratio or drainage. Examples of additional foam stabilizers include nonionic surfactants, such as glycerol aliphatic esters, propylene glycol fatty acid esters, sorbitan fatty acid esters, polyoxyethylene sorbitol fatty acid esters, polyoxyethylene alkyl ethers, polyoxyethylene polyoxypropylene ethers, polyethylene glycol fatty acid esters, alkyl alkanol amides, and alkyl polyglycosides; amphoteric surfactants, such as alkyldimethylamino acetic acid betaines, alkyldimethylamine oxides, alkylcarboxymethylhydroxyethylimidazolinium betaines, alkylamidepropylbetaines, and alkylhydroxysulfobetaines; polyethylene glycol, polyvinylalcohol, polyvinylpyrrolidone, carboxymethylcellulose, arabic rubber, sodium alginate, polypropylene glycol, and polyvinyl resin.

Examples of the freezing point depressors include ethylene glycol, propylene glycol, cellosolves (ethylcellosolve, butylcellosolve), carbitols (ethylcarbitol, butylcarbitol, hexylcarbitol, octylcarbitol), lower alcohols (isopropylalcohol, butanol, octanol), and urea.

Examples of the antirust agents include sodium tungstate, sodium molybdate, sodium nitrite, sodium benzoate, monoethanolamine, diethanolamine, triethanolamine, and 1,2,3-benzotriazole.

Examples of the pH modifiers include organic acids, such as acetic acid, malic acid, and citric acid, and salts thereof, and phosphoric acid and salts thereof.

The fire extinguishing agent of the present invention can be produced by various methods, and specifically, the fire extinguishing agent can be produced by a production method in which the components (A) to (D) are put in a container and are mixed using various mixers.

The fire extinguishing agent of the present invention can be used in fire extinction in a fire disaster as a foam fire extinguishing agent by blowing or mixing air, carbonic dioxide gas, nitrogen, a low boiling point fluorocarbon, for example, difluorodichloromethane, or various other incombustible gases therein by various methods. Since the fire extinguishing agent of the present invention has a relatively low viscosity, the agent can be used by: storing a thick stock solution in a stock tank; adjusting the dilution degree in use by various methods, for example, by allowing the stock solution to be absorbed in the middle of a water flow leading to fire extinguishing equipment or a foam nozzle; blowing or mixing an incombustible gas, such as air, to allow the agent to foam; and emitting or feeding the foam onto the flame from above or below. In addition, the fire extinguishing agent can be used by previously diluting the agent with water to a degree for use, and filling it in a fire extinguisher, fire extinguishing facilities for parking lot, dangerous substance-fixed fire extinguishing facilities, or package-type fire extinguishing facilities.

In a method of emitting the fire extinguishing agent of the present invention, an emission nozzle for use in various applications can be used.

Examples of such emission nozzles include a foam chamber used most generally for a petroleum tank or the like, a nozzle meeting the ISO standard, a nozzle meeting the UL standard, a nozzle meeting the MIL standard, a hand nozzle attached to a fire engine for chemical fire, an air foam hand nozzle, an SSI nozzle, an HK nozzle provided by Nippon Hakuyohin Kentei Kyokai, a foam head used in fire extinguishing facilities for parking lot, and a spray head.

The fire extinguishing agent of the present invention can be used by various emitting methods. In addition, the fire extinguishing agent of the present invention can be loaded on a fire engine for chemical fire or a stock solution carrier, and can be placed at a variety of facilities, specifically, a petroleum station or factory including a crude oil tank or dangerous substance facilities, airport facilities, port facilities and ships loaded with dangerous substances, a gas station, an underground parking lot, a building, a tunnel, a bridge, or the like. Furthermore, the fire extinguishing agent of the present invention can be suitably used for a fire disaster of liquid dangerous substances, a general fire disaster, such as a fire disaster of wood in a house or the like, and a fire disaster of tire or other rubbers or plastics.

In addition, since the fire extinguishing agent of the present invention is excellent in liquid resistance, flame resistance, heat resistance, and foamability, the fire extinguishing agent is suitable for suffocation extinction or cooling extinction in a fire disaster of Tempura oil, salad oil, or the like by directly injecting a thick stock solution or an aqueous low-degree-diluted solution onto a burning oil surface. In addition, since the fire extinguishing agent of the present invention is excellent in dilution dissolution stability, a diluted solution filled in a spray can may be used as a simple initial fire extinguisher for house use. In addition, since the foam of the fire extinguishing agent of the present invention can exist stably on an aqueous solution based on water, a sol-gel substance, sludge, dirt, or various organic solvents or organic compounds, the vaporization of a volatile substance from the above substances can be suppressed. Accordingly, the fire extinguishing agent can be used for preventing inflammables from igniting or from emitting odor.

The fire extinguishing agent of the present invention can be used in combination with a powder fire extinguishing agent containing sodium bicarbonate, potassium bicarbonate, magnesium bicarbonate, ammonium sulfate, ammonium phosphate, calcium carbonate, or the like as a component, a protein foam fire extinguishing agent, or a synthetic interface foam fire extinguishing agent.

### Examples

The present invention will be described in more detail below with reference to specific examples. Unless otherwise specified, "parts" and "%" in the examples are by mass.

In the examples, a polyethylenimines (A-1) and (A-2) were used as the cationic polyamine compound (A). The contents of primary amino groups, secondary amino groups, and tertiary amino groups based on all the amino groups in each polyethylenimine and number molecular weights are shown in table 1.

### [Table 1]

**Table 1**

| Polyethylenimine | (A-1) | (A-2) |
|---|---|---|
| Content of primary amino groups (%) | 25 | 35 |
| Content of secondary amino groups (%) | 50 | 35 |
| Content of tertiary amino groups (%) | 25 | 30 |
| Number average molecular weight | 10,000 | 70,000 |

The content of each kind of amino groups in the polyethylenimines (A-1) and (A-2) was measured according to the following conditions.
Measurement apparatus: FT-NMR, EX-270 model, from JEOL, Ltd.
Solvent: D₂O
Measurement mode: COM
Observed nuclear: ¹³C
Irradiated nuclear: ¹H (67.70 MHz)
Pulse width: 4.1 µs

### Example 1 (preparation of fire extinguishing agent)

6 parts of the polyethylenimine (A-1), 3 parts of the surfactant (B-1-a), 2 parts of the polybasic acid compound (C-1) (n=4), 9 parts of the surfactant (D1-b), 6 parts of butyl carbitol, 20 parts of ethylene glycol, and 54 parts of water were mixed to obtain a fire extinguishing agent (1) of the present invention. The appearance of the obtained fire extinguishing agent was observed and the freezing point, the kinematic viscosity, the amount of sediment when diluted, the foaming performance, the fire-extinguishing performance, and the fire resistance performance were evaluated according to the following methods. The evaluation results are shown in Table 2.

### <Evaluation of appearance>

Appearance was visually observed.

### <Freezing point, kinematic viscosity, amount of sediment when diluted>

They were evaluated according to the methods described in "Section 2, Foam Fire Extinguishing Media" in the Ministerial Order to Provide Technical Standards for Foam Fire Extinguishing Media (Order of Ministry of Home Affairs No. 26 of December 9, 1975). The amount of sediment when diluted was evaluated using a diluted solution of the agent diluted at 3% by volume with tap water.

### <Evaluations of foaming performance and fire-extinguishing performance>

Evaluations of the foaming performance, the fire-extinguishing performance (evaluation of the extinction time and evaluation by a sealing test), and the fire resistance performance (evaluation by a burn back test) were performed according to the methods described in "Section 2, Foam Fire Extinguishing Media" in the Ministerial Order to Provide Technical Standards for Foam Fire Extinguishing Media (Order of Ministry of Home Affairs No. 26 of December 9, 1975), *"Seizousho-tou no Awashouka-setsubi no Kijun no Saimoku wo Sadameru Kokuji* (notification to define details of standard of foam fire extinguishing facilities in manufacturing plants, etc.) (Notification of Ministry of Internal Affairs and Communications No. 559)" based on the provision of Article 38(3) of Rules Concerning the Control of Hazardous Materials (Prime Minister's Office Ordinance No. 53 of 1959), and ISO 7203-3 "Fire extinguishing media - Foam Concentrates - Part 3: Specification for Low-expansion foam Concentrates for top application to water-miscible liquids". The evaluations were performed using fresh water and marine water as diluting media and using solvents shown in Table 4 as a burning solvent for the test. In addition, the dilution degree of the fire extinguishing agent was 3% by volume.

### Examples 2 to 40 (the same as above)

Fire extinguishing agents (2) to (40) were obtained in the same manner as in Example 1 except for using the formulations shown in Table 2 and Table 3. The evaluations were performed in the same manner as in Example 1 and the results are shown in Tables 2 to 7. Note that when the amount of the surfactant (D) blended in Examples 2 to 40 was different from that in Example 1, the amount of water blended was appropriately changed so that the total of the cationic polyamine compound (A), the surfactant (B), the polybasic acid (C), the surfactant (D), butyl carbitol, ethylene glycol, and water was 100 parts.

### Comparative Examples 1 to 7 (preparation of fire extinguishing agents for comparison)

Fire extinguishing agents (1') to (7') for comparison were obtained in the same manner as in Example 1 except that the formulations shown in Table 8 were used and that 9 parts of water was used in place of 9 parts of the surfactant (D). Evaluations were performed in the same manner as in Example 1 and the results are shown in Tables 8 and 9.

### [Table 2]

**Table 2**

| | Cationic polyamine compound (A) | Surfactant (B) | Polybasic acid (C) | Surfactant (D) [amount (parts)] | Appearance | Pour point (°C) | Kinematic viscosity [-10°C] (cst) | Amount of sediment (vol%) |
|---|---|---|---|---|---|---|---|---|
| Example 1 | A-1 | B-1-a | C-1(n=4) | D-1-b [9] | completely clear | -22.5 | 137 | trace |
| Example 2 | A-1 | B-1-d | C-2 | D-1-a [6.5] | completely clear | -17.5 | 131 | trace |
| Example 3 | A-2 | B-1-i | C-1(n=4) | D-1-b [1.5] | completely clear | -20.0 | 145 | trace |
| Example 4 | A-2 | B-1-p | C-1(n=6) | D-1-c [0.5] | completely clear | -22.5 | 138 | trace |
| Example 5 | A-1 | B-1-r | C-4 | D-1-d [7] | completely clear | -20.0 | 150 | trace |
| Example 6 | A-1 | B-2-b | C-3 | D-1-f [7.5] | completely clear | -20.0 | 160 | trace |
| Example 7 | A-2 | B-2-f | C-13 | D-1-a [10] | completely clear | -20.0 | 163 | trace |
| Example 8 | A-2 | B-2-o | C-16 | D-1-b [2] | completely clear | -22.5 | 130 | trace |
| Example 9 | A-1 | B-2-n | C-23 | D-1-c [1.5] | completely clear | -20.0 | 140 | trace |
| Example 10 | A-1 | B-2-p | C-1(n=4) | D-1-d [1] | completely clear | -22.5 | 152 | trace |
| Example 11 | A-2 | B-3-a | C-24 | D-1-f [0.5] | completely clear | -20.0 | 154 | trace |
| Example 12 | A-2 | B-3-e | C-31(q=2) | D-2-a [1] | completely clear | -22.5 | 138 | trace |
| Example 13 | A-1 | B-3-h | C-28 | D-2-b [3] | completely clear | -20.0 | 145 | trace |
| Example 14 | A-1 | B-3-k | C-1(n=6) | D-2-c [5] | completely clear | -22.5 | 155 | trace |
| Example 15 | A-2 | B-4-b | C-16 | D-2-e [4] | completely clear | -22.5 | 152 | trace |
| Example 16 | A-2 | B-4-f | C-10 | D-2-a [8] | completely clear | -22.5 | 140 | trace |
| Example 17 | A-1 | B-4-i | C-17 | D-2-a [10] | completely clear | -20.0 | 132 | trace |
| Example 18 | A-1 | B-4-k | C-7 | D-2-b [0.5] | completely clear | -20.0 | 129 | trace |
| Example 19 | A-2 | B-4-m | C-1(n=4) | D-2-c [4] | completely clear | -22.5 | 148 | trace |
| Example 20 | A-2 | B-4-n | C-14 | D-2-e [6] | completely clear | -20.0 | 150 | trace |

### [Table 3]

**Table 3**

| | Cationic polyamine compound (A) | Surfactant (B) | Polybasic acid (C) | Surfactant (D) [amount (parts)] | Appearance | Pour point (°C) | Kinematic viscosity [-10°C] (cst) | Amount of sediment (vol%) |
|---|---|---|---|---|---|---|---|---|
| Example 21 | A-1 | B-4-o | C-14 | D-3-a [2] | completely clear | -22.5 | 136 | trace |
| Example 22 | A-1 | B-5-a | C-1(n=2) | D-3-b [1] | completely clear | -20.0 | 142 | trace |
| Example 23 | A-2 | B-5-d | C-10 | D-3-c [1.5] | completely clear | -22.5 | 150 | trace |
| Example 24 | A-2 | B-5-h | C-1(n=4) | D-3-a [5] | completely clear | -22.5 | 148 | trace |
| Example 25 | A-1 | B-5-i | C-11 | D-3-b [4] | completely clear | -20.0 | 147 | trace |
| Example 26 | A-1 | B-6-b | C-28 | D-3-d [3] | completely clear | -20.0 | 139 | trace |
| Example 27 | A-2 | B-6-e | C-16 | D-3-e [7] | completely clear | -22.5 | 160 | trace |
| Example 28 | A-2 | B-6-h | C-22 | D-4-a [5] | completely clear | -20.0 | 162 | trace |
| Example 29 | A-1 | B-7-a | C-3 | D-4-b [4] | completely clear | -22.5 | 150 | trace |
| Example 30 | A-1 | B-7-e | C-26 | D-4-d [2] | completely clear | -22.5 | 138 | trace |
| Example 31 | A-2 | B-7-i | C-16 | D-4-e [6] | completely clear | -25.0 | 145 | trace |
| Example 32 | A-2 | B-8-c | C-18 | D-4-a [9] | completely clear | -20.0 | 152 | trace |
| Example 33 | A-1 | B-8-g | C-23 | D-4-b [5] | completely clear | -22.5 | 159 | trace |
| Example 34 | A-1 | B-8-h | C-24 | D-5-a [3] | completely clear | -22.5 | 153 | trace |
| Example 35 | A-2 | B-9-a | C-28 | D-5-b [2] | completely clear | -20.0 | 140 | trace |
| Example 36 | A-2 | B-9-b | C-31(q=2) | D-5-c [4] | completely clear | -20.0 | 145 | trace |
| Example 37 | A-1 | B-9-e | C-1 (n=8) | D-5-d [1.5] | completely clear | -22.5 | 139 | trace |
| Example 38 | A-1 | B-10-b | C-1(n=4) | D-5-f [0.5] | completely clear | -22.5 | 149 | trace |
| Example 39 | A-2 | B-10-f | C-1(n=4) | D-5-a [1] | completely clear | -20.0 | 151 | trace |
| Example 40 | A-2 | B-10-h | C-10 | D-5-b [3] | completely clear | -20.0 | 155 | trace |

### [Table 4]

**Table 4**

| | Testing method | Diluting water | Burning solvent | Foaming performance (expansion ratio) | Fire extinguishing performance | | Fire resistance performance |
|---|---|---|---|---|---|---|---|
| | | | | | Extinction time (min:sec) | Sealing test | Burn back test |
| Example 1 | Order of Ministry of Home Affairs No. 26 | fresh water | heptane | 5.7 | 2:40 | not ignited | self-extinguishing |
| | | marine water | heptane | 5.2 | 3:12 | not ignited | self-extinguishing |
| | Notification No. 559 | fresh water | methanol | 5.7 | 0:50 | not ignited | self-extinguishing |
| | | marine water | methanol | 5.2 | 1:15 | not ignited | self-extinguishing |
| | ISO7203-3 | fresh water | acetone | 7.5 | 2:40 | not ignited | no burning surface at 15 min |
| | | marine water | acetone | 7.0 | 2:59 | not ignited | no burning surface at 15 min |
| Example 2 | Order of Ministry of Home Affairs No. 26 | fresh water | heptane | 5.5 | 2:58 | not ignited | self-extinguishing |
| | | marine water | heptane | 5.2 | 3:11 | not ignited | self-extinguishing |
| | Notification No. 559 | fresh water | acetone | 5.5 | 1:36 | not ignited | self-extinguishing |
| | | marine water | acetone | 5.2 | 2:04 | not ignited | self-extinguishing |
| | ISO7203-3 | fresh water | acetone | 8.0 | 2:46 | not ignited | no burning surface at 15 min |
| | | marine water | acetone | 7.4 | 2:58 | not ignited | no burning surface at 15 min |
| Example 3 | Order of Ministry of Home Affairs No. 26 | fresh water | heptane | 5.8 | 2:32 | not ignited | self-extinguishing |
| | | marine water | heptane | 5.2 | 2:57 | not ignited | self-extinguishing |
| | Notification No. 559 | fresh water | isopropanol | 5.8 | 0:57 | not ignited | self-extinguishing |
| | | marine water | isopropanol | 5.2 | 1:24 | not ignited | self-extinguishing |
| | ISO7203-3 | fresh water | acetone | 6.5 | 3:10 | not ignited | no burning surface at 15 min |
| | | marine water | acetone | 6.2 | 2:50 | not ignited | no burning surface at 15 min |
| Example 4 | Order of Ministry of Home Affairs No. 26 | fresh water | heptane | 5.8 | 2:35 | not ignited | self-extinguishing |
| | | marine water | heptane | 5.4 | 3:07 | not ignited | self-extinguishing |
| | Notification No. 559 | fresh water | methanol | 5.8 | 0:52 | not ignited | self-extinguishing |
| | | marine water | methanol | 5.4 | 1:15 | not ignited | self-extinguishing |
| | ISO7203-3 | fresh water | acetone | 6.1 | 2:30 | not ignited | no burning surface at 15 min |
| | | marine water | acetone | 6.0 | 3:25 | not ignited | no burning surface at 15 min |
| Example 5 | Order of Ministry of Home Affairs No. 26 | fresh water | heptane | 5.4 | 2:46 | not ignited | self-extinguishing |
| | | marine water | heptane | 5.2 | 3:30 | not ignited | self-extinguishing |
| | Notification No. 559 | fresh water | acetone | 5.4 | 1:45 | not ignited | self-extinguishing |
| | | marine water | acetone | 5.2 | 2:15 | not ignited | self-extinguishing |
| | ISO7203-3 | fresh water | acetone | 8.5 | 2:53 | not ignited | no burning surface at 15 min |
| | | marine water | acetone | 8.2 | 3:30 | not ignited | no burning surface at 15 min |
| Example 6 | Order of Ministry of Home Affairs No. 26 | fresh water | heptane | 5.7 | 2:50 | not ignited | self-extinguishing |
| | | marine water | heptane | 5.3 | 3:18 | not ignited | self-extinguishing |
| | Notification No. 559 | fresh water | methanol | 5.7 | 0:59 | not ignited | self-extinguishing |
| | | marine water | methanol | 8.8 | 1:28 | not ignited | self-extinguishing |
| | ISO7203-3 | fresh water | acetone | 8.5 | 2:56 | not ignited | no burning surface at 15 min |
| | | marine water | acetone | 6.1 | 2:54 | not ignited | no burning surface at 15 min |
| Example 7 | Order of Ministry of Home Affairs No. 26 | fresh water | heptane | 5.4 | 2:52 | not ignited | self-extinguishing |
| | | marine water | heptane | 5.1 | 3:22 | not ignited | self-extinguishing |
| | Notification No. 559 | fresh water | isopropanol | 5.4 | 1:08 | not ignited | self-extinguishing |
| | | marine water | isopropanol | 5.1 | 1:48 | not ignited | self-extinguishing |
| | ISO7203-3 | fresh water | acetone | 10.0 | 2:48 | not ignited | no burning surface at 15 min |
| | | marine water | acetone | 9.6 | 3:38 | not ignited | no burning surface at 15 min |
| Example 8 | Order of Ministry of Home Affairs No. 26 | fresh water | heptane | 6.0 | 2:56 | not ignited | self-extinguishing |
| | | marine water | heptane | 5.4 | 3:20 | not ignited | self-extinguishing |
| | Notification No. 559 | fresh water | acetone | 6.0 | 1:49 | not ignited | self-extinguishing |
| | | marine water | acetone | 5.4 | 2:23 | not ignited | self-extinguishing |
| | ISO7203-3 | fresh water | acetone | 6.8 | 2:50 | not ignited | no burning surface at 15 min |
| | | marine water | acetone | 6.4 | 3:20 | not ignited | no burning surface at 15 min |
| Example 9 | Order of Ministry of Home Affairs No. 26 | fresh water | heptane | 5.7 | 2:56 | not ignited | self-extinguishing |
| | | marine water | heptane | 5.4 | 3:15 | not ignited | self-extinguishing |
| | Notification No. 559 | fresh water | methanol | 5.7 | 0:59 | not ignited | self-extinguishing |
| | | marine water | methanol | 5.4 | 1:25 | not ignited | self-extinguishing |
| | ISO7203-3 | fresh water | acetone | 6.4 | 2:00 | not ignited | no burning surface at 15 min |
| | | marine water | acetone | 6.0 | 2:34 | not ignited | no burning surface at 15 min |
| Example 10 | Order of Ministry of Home Affairs No. 26 | fresh water | heptane | 5.5 | 2:32 | not ignited | self-extinguishing |
| | | marine water | heptane | 5.2 | 2:57 | not ignited | self-extinguishing |
| | Notification No. 559 | fresh water | acetone | 5.5 | 1:58 | not ignited | self-extinguishing |
| | | marine water | acetone | 5.2 | 2:16 | not ignited | self-extinguishing |
| | ISO7203-3 | fresh water | acetone | 6.2 | 2:50 | not ignited | no burning surface at 15 min |
| | | marine water | acetone | 6.0 | 3:08 | not ignited | no burning surface at 15 min |

### [Table 5]

**Table 5**

| | Testing method | Diluting water | Burning solvent | Foaming performance (expansion ratio) | Fire extinguishing performance | | Fire resistance performance |
|---|---|---|---|---|---|---|---|
| | | | | | Extinction time (min:sec) | Sealing test | Burn back test |
| Example 11 | Order of Ministry of Home Affairs No. 26 | fresh water | heptane | 5.6 | 2:20 | not ignited | self-extinguishing |
| | | marine water | heptane | 5.3 | 2:48 | not ignited | self-extinguishing |
| | Notification No. 559 | fresh water | isopropanol | 5.6 | 1:07 | not ignited | self-extinguishing |
| | | marine water | isopropanol | 5.3 | 1:52 | not ignited | self-extinguishing |
| | ISO7203-3 | fresh water | acetone | 6.2 | 2:50 | not ignited | no burning surface at 15 min |
| | | marine water | acetone | 6.0 | 3:24 | not ignited | no burning surface at 15 min |
| Example 12 | Order of Ministry of Home Affairs No. 26 | fresh water | heptane | 5.8 | 2:30 | not ignited | self-extinguishing |
| | | marine water | heptane | 5.5 | 2:58 | not ignited | self-extinguishing |
| | Notification No. 559 | fresh water | methanol | 5.8 | 1:10 | not ignited | self-extinguishing |
| | | marine water | methanol | 5.5 | 1:18 | not ignited | self-extinguishing |
| | ISO7203-3 | fresh water | acetone | 6.4 | 2:50 | not ignited | no burning surface at 15 min |
| | | marine water | acetone | 6.1 | 3:10 | not ignited | no burning surface at 15 min |
| Example 13 | Order of Ministry of Home Affairs No. 26 | fresh water | heptane | 5.7 | 2:46 | not ignited | self-extinguishing |
| | | marine water | heptane | 5.4 | 3:20 | not ignited | self-extinguishing |
| | Notification No. 559 | fresh water | acetone | 5.7 | 1:49 | not ignited | self-extinguishing |
| | | marine water | acetone | 5.4 | 2:08 | not ignited | self-extinguishing |
| | ISO7203-3 | fresh water | acetone | 6.5 | 2:50 | not ignited | no burning surface at 15 min |
| | | marine water | acetone | 6.2 | 3:08 | not ignited | no burning surface at 15 min |
| Example 14 | Order of Ministry of Home Affairs No. 26 | fresh water | heptane | 5.6 | 2:25 | not ignited | self-extinguishing |
| | | marine water | heptane | 5.3 | 2:54 | not ignited | self-extinguishing |
| | Notification No. 559 | fresh water | methanol | 5.6 | 0:58 | not ignited | self-extinguishing |
| | | marine water | methanol | 5.3 | 1:25 | not ignited | self-extinguishing |
| | ISO7203-3 | fresh water | acetone | 6.4 | 2:30 | not ignited | no burning surface at 15 min |
| | | marine water | acetone | 6.2 | 2:56 | not ignited | no burning surface at 15 min |
| Example 15 | Order of Ministry of Home Affairs No. 26 | fresh water | heptane | 5.9 | 2:21 | not ignited | self-extinguishing |
| | | marine water | heptane | 5.6 | 2:48 | not ignited | self-extinguishing |
| | Notification No. 559 | fresh water | isopropanol | 5.9 | 0:48 | not ignited | self-extinguishing |
| | | marine water | isopropanol | 5.6 | 1:20 | not ignited | self-extinguishing |
| | ISO7203-3 | fresh water | acetone | 7.2 | 2:32 | not ignited | no burning surface at 15 min |
| | | marine water | acetone | 7.0 | 3:06 | not ignited | no burning surface at 15 min |

| | Testing method | Diluting water | Burning | Foaming performance (expansion ratio) | Fire extinguishing performance | | Fire resistance performance |
|---|---|---|---|---|---|---|---|
| | | | | | Extinction time (min:sec) | Sealing test | Burn back test |
| Example 16 | Order of Ministry of Home Affairs No. 26 | fresh water | heptane | 5.5 | 2:43 | not ignited | self-extinguishing |
| | | marine water | heptane | 5.2 | 3:16 | not ignited | self-extinguishing |
| | Notification No. 559 | fresh water | acetone | 5.5 | 1:27 | not ignited | self-extinguishing |
| | | marine water | acetone | 5.2 | 1:58 | not ignited | self-extinguishing |
| | ISO7203-3 | fresh water | acetone | 8.5 | 2:34 | not ignited | no burning surface at 15 min |
| | | marine water | acetone | 8.4 | 3:08 | not ignited | no burning surface at 15 min |
| Example 17 | Order of Ministry of Home Affairs No. 26 | fresh water | heptane | 5.7 | 3:07 | not ignited | self-extinguishing |
| | | marine water | heptane | 5.5 | 3:30 | not ignited | self-extinguishing |
| | Notification No. 559 | fresh water | methanol | 5.7 | 0:58 | not ignited | self-extinguishing |
| | | marine water | methanol | 5.5 | 1:23 | not ignited | self-extinguishing |
| | ISO7203-3 | fresh water | acetone | 9.9 | 2:50 | not ignited | no burning surface at 15 min |
| | | marine water | acetone | 9.5 | 3:34 | not ignited | no burning surface at 15 min |
| Example 18 | Order of Ministry of Home Affairs No. 26 | fresh water | heptane | 5.4 | 2:20 | not ignited | self-extinguishing |
| | | marine water | heptane | 5.2 | 2:51 | not ignited | self-extinguishing |
| | Notification No. 559 | fresh water | acetone | 5.4 | 1:48 | not ignited | self-extinguishing |
| | | marine water | acetone | 5.2 | 2:26 | not ignited | self-extinguishing |
| | ISO7203-3 | fresh water | acetone | 6.5 | 3:00 | not ignited | no burning surface at 15 min |
| | | marine water | acetone | 6.2 | 3:12 | not ignited | no burning surface at 15 min |
| Example 19 | Order of Ministry of Home Affairs No. 26 | fresh water | heptane | 5.7 | 2:14 | not ignited | self-extinguishing |
| | | marine water | heptane | 5.4 | 2:50 | not ignited | self-extinguishing |
| | Notification No. 559 | fresh water | isopropanol | 5.7 | 1:12 | not ignited | self-extinguishing |
| | | marine water | isopropanol | 5.4 | 1:59 | not ignited | self-extinguishing |
| | ISO7203-3 | fresh water | acetone | 7.2 | 2:25 | not ignited | no burning surface at 15 min |
| | | marine water | acetone | 6.8 | 2:56 | not ignited | no burning surface at 15 min |
| Example 20 | Order of Ministry of Home Affairs No. 26 | fresh water | heptane | 5.6 | 2:56 | not ignited | self-extinguishing |
| | | marine water | heptane | 5.3 | 3:00 | not ignited | self-extinguishing |
| | Notification No. 559 | fresh water | methanol | 5.6 | 0:55 | not ignited | self-extinguishing |
| | | marine water | methanol | 5.3 | 1:16 | not ignited | self-extinguishing |
| | ISO7203-3 | fresh water | acetone | 8.2 | 2:15 | not ignited | no burning surface at 15 min |
| | | marine water | acetone | 7.8 | 2:45 | not ignited | no burning surface at 15 min |

### [Table 6]

**Table 6**

| | Testing method | Diluting water | Burning solvent | Foaming performance (expansion ratio) | Fire extinguishing performance | | Fire resistance performance |
|---|---|---|---|---|---|---|---|
| | | | | | Extinction time (min:sec) | Sealing test | Burn back test |
| Example 21 | Order of Ministry of Home Affairs No. 26 | fresh water | heptane | 5.4 | 2:15 | not ignited | self-extinguishing |
| | | marine water | heptane | 5.2 | 2:54 | not ignited | self-extinguishing |
| | Notification No. 559 | fresh water | acetone | 5.4 | 1:45 | not ignited | self-extinguishing |
| | | marine water | acetone | 5.2 | 2:14 | not ignited | self-extinguishing |
| | ISO7203-3 | fresh water | acetone | 6.6 | 2:21 | not ignited | no burning surface at 15 min |
| | | marine water | acetone | 6.4 | 2:58 | not ignited | no burning surface at 15 min |
| Example 22 | Order of Ministry of Home Affairs No. 26 | fresh water | heptane | 5.7 | 2:30 | not ignited | self-extinguishing |
| | | marine water | heptane | 5.5 | 2:57 | not ignited | self-extinguishing |
| | Notification No. 559 | fresh water | methanol | 5.7 | 1:02 | not ignited | self-extinguishing |
| | | marine water | methanol | 5.5 | 1:35 | not ignited | self-extinguishing |
| | ISO7203-3 | fresh water | acetone | 6.5 | 2:26 | not ignited | no burning surface at 15 min |
| | | marine water | acetone | 6.2 | 3:01 | not ignited | no burning surface at 15 min |
| Example 23 | Order of Ministry of Home Affairs No. 26 | fresh water | heptane | 5.8 | 2:34 | not ignited | self-extinguishing |
| | | marine water | heptane | 5.5 | 3:02 | not ignited | self-extinguishing |
| | Notification No. 559 | fresh water | isopropanol | 5.8 | 1:10 | not ignited | self-extinguishing |
| | | marine water | isopropanol | 5.5 | 1:56 | not ignited | self-extinguishing |
| | ISO7203-3 | fresh water | acetone | 6.8 | 2:06 | not ignited | no burning surface at 15 min |
| | | marine water | acetone | 6.6 | 2:59 | not ignited | no burning surface at 15 min |
| Example 24 | Order of Ministry of Home Affairs No. 26 | fresh water | heptane | 5.7 | 2:45 | not ignited | self-extinguishing |
| | | marine water | heptane | 5.5 | 3:14 | not ignited | self-extinguishing |
| | Notification No. 559 | fresh water | acetone | 5.7 | 1:56 | not ignited | self-extinguishing |
| | | marine water | acetone | 5.5 | 2:32 | not ignited | self-extinguishing |
| | ISO7203-3 | fresh water | acetone | 8.2 | 2:58 | not ignited | no burning surface at 15 min |
| | | marine water | acetone | 7.7 | 3:38 | not ignited | no burning surface at 15 min |
| Example | Order of Ministry of Home Affairs No. 26 | fresh water | heptane | 5.8 | 2:36 | not ignited | self-extinguishing |
| | | marine water | heptane | 5.5 | 3:05 | not ignited | self-extinguishing |
| | Notification No. 559 | fresh water | methanol | 5.8 | 0:48 | not ignited | self-extinguishing |
| | | marine water | methanol | 5.5 | 1:10 | not ignited | self-extinguishing |
| | ISO7203-3 | fresh water | acetone | 7.9 | 2:20 | not ignited | no burning surface at 15 min |
| | | marine water | acetone | 7.7 | 2:58 | not ignited | no burning surface at 15 min |
| Example 26 | Order of Ministry of Home Affairs No. 26 | fresh water | heptane | 5.6 | 2:38 | not ignited | self-extinguishing |
| | | marine water | heptane | 5.4 | 2:58 | not ignited | self-extinguishing |
| | Notification No. 559 | fresh water | acetone | 5.6 | 1:30 | not ignited | self-extinguishing |
| | | marine water | acetone | 5.4 | 2:24 | not ignited | self-extinguishing |
| | ISO7203-3 | fresh water | acetone | 7 | 2:05 | not ignited | no burning surface at 15 min |
| | | marine water | acetone | 6.6 | 3:04 | not ignited | no burning surface at 15 min |
| Example 27 | Order of Ministry of Home Affairs No. 26 | fresh water | heptane | 5.4 | 2:46 | not ignited | self-extinguishing |
| | | marine water | heptane | 5.2 | 3:26 | not ignited | self-extinguishing |
| | Notification No. 559 | fresh water | isopropanol | 5.4 | 1:28 | not ignited | self-extinguishing |
| | | marine water | isopropanol | 5.2 | 2:05 | not ignited | self-extinguishing |
| | ISO7203-3 | fresh water | acetone | 6.3 | 2:45 | not ignited | no burning surface at 15 min |
| | | marine water | acetone | 6.1 | 3:32 | not ignited | no burning surface at 15 min |
| Example 28 | Order of Ministry of Home Affairs No. 26 | fresh water | heptane | 5.6 | 2:30 | not ignited | self-extinguishing |
| | | marine water | heptane | 5.4 | 3:05 | not ignited | self-extinguishing |
| | Notification No. 559 | fresh water | methanol | 5.6 | 0:53 | not ignited | self-extinguishing |
| | | marine water | methanol | 5.4 | 1:20 | not ignited | self-extinguishing |
| | ISO7203-3 | fresh water | acetone | 8.0 | 2:46 | not ignited | no burning surface at 15 min |
| | | marine water | acetone | 7.5 | 3:16 | not ignited | no burning surface at 15 min |
| Example 29 | Order of Ministry of Home Affairs No. 26 | fresh water | heptane | 5.7 | 2:46 | not ignited | self-extinguishing |
| | | marine water | heptane | 5.4 | 3:12 | not ignited | self-extinguishing |
| | Notification No. 559 | fresh water | acetone | 5.7 | 1:38 | not ignited | self-extinguishing |
| | | marine water | acetone | 5.4 | 2:04 | not ignited | self-extinguishing |
| | ISO7203-3 | fresh water | acetone | 7.6 | 2:40 | not ignited | no burning surface at 15 min |
| | | marine water | acetone | 7.2 | 3:20 | not ignited | no burning surface at 15 min |
| Example 30 | Order of Ministry of Home Affairs No. 26 | fresh water | heptane | 5.6 | 2:25 | not ignited | self-extinguishing |
| | | marine water | heptane | 5.5 | 3:02 | not ignited | self-extinguishing |
| | Notification No. 559 | fresh water | methanol | 5.6 | 0:56 | not ignited | self-extinguishing |
| | | marine water | methanol | 5.5 | 1:18 | not ignited | self-extinguishing |
| | ISO7203-3 | fresh water | acetone | 6.5 | 2:45 | not ignited | no burning surface at 15 min |
| | | marine water | acetone | 6.2 | 3:10 | not ignited | no burning surface at 15 min |

### [Table 7]

**Table 7**

| | Testing method | Diluting water | Burning solvent | Foaming performance (expansion ratio) | Fire extinguishing performance | | Fire resistance performance |
|---|---|---|---|---|---|---|---|
| | | | | | Extinction time (min:sec) | Sealing test | Burn back test |
| Example 31 | Order of Ministry of Home Affairs No. 26 | fresh water | heptane | 5.9 | 2:43 | not ignited | self-extinguishing |
| | | marine water | heptane | 5.7 | 3:18 | not ignited | self-extinguishing |
| | Notification No. 559 | fresh water | isopropanol | 5.9 | 1:00 | not ignited | self-extinguishing |
| | | marine water | isopropanol | 5.7 | 1:34 | not ignited | self-extinguishing |
| | ISO7203-3 | fresh water | acetone | 7.0 | 2:47 | not ignited | no burning surface at 15 min |
| | | marine water | acetone | 6.8 | 3:28 | not ignited | no burning surface at 15 min |
| Example 32 | Order of Ministry of Home Affairs No. 26 | fresh water | heptane | 5.6 | 2:45 | not ignited | self-extinguishing |
| | | marine water | heptane | 5.4 | 3:19 | not ignited | self-extinguishing |
| | Notification No. 559 | fresh water | acetone | 5.6 | 1:30 | not ignited | self-extinguishing |
| | | marine water | acetone | 5.4 | 2:08 | not ignited | self-extinguishing |
| | ISO7203-3 | fresh water | acetone | 9.4 | 2:45 | not ignited | no burning surface at 15 min |
| | | marine water | acetone | 9.0 | 3:28 | not ignited | no burning surface at 15 min |
| Example 33 | Order of Ministry of Home Affairs No. 26 | fresh water | heptane | 5.6 | 2:33 | not ignited | self-extinguishing |
| | | marine water | heptane | 5.4 | 3:08 | not ignited | self-extinguishing |
| | Notification No. 559 | fresh water | methanol | 5.6 | 0:54 | not ignited | self-extinguishing |
| | | marine water | methanol | 5.4 | 1:19 | not ignited | self-extinguishing |
| | ISO7203-3 | fresh water | acetone | 8 | 2:47 | not ignited | no burning surface at 15 min |
| | | marine water | acetone | 7.6 | 3:32 | not ignited | no burning surface at 15 min |
| Example 34 | Order of Ministry of Home Affairs No. 26 | fresh water | heptane | 5.8 | 2:25 | not ignited | self-extinguishing |
| | | marine water | heptane | 5.5 | 2:52 | not ignited | self-extinguishing |
| | Notification No. 559 | fresh water | acetone | 5.8 | 1:40 | not ignited | self-extinguishing |
| | | marine water | acetone | 5.5 | 2:14 | not ignited | self-extinguishing |
| | ISO7203-3 | fresh water | acetone | 7.2 | 2:30 | not ignited | no burning surface at 15 min |
| | | marine water | acetone | 7.0 | 3:08 | not ignited | no burning surface at 15 min |
| Example 35 | Order of Ministry of Home Affairs No. 26 | fresh water | heptane | 5.8 | 2:32 | not ignited | self-extinguishing |
| | | marine water | heptane | 5.6 | 3:01 | not ignited | self-extinguishing |
| | Notification No. 559 | fresh water | isopropanol | 5.8 | 0:54 | not ignited | self-extinguishing |
| | | marine water | isopropanol | 5.6 | 1:26 | not ignited | self-extinguishing |
| | ISO7203-3 | fresh water | acetone | 7.1 | 2:48 | not ignited | no burning surface at 15 min |
| | | marine water | acetone | 6.9 | 3:20 | not ignited | no burning surface at 15 min |
| Example 36 | Order of Ministry of Home Affairs No. 26 | fresh water | heptane | 5.5 | 2:30 | not ignited | self-extinguishing |
| | | marine water | heptane | 5.3 | 2:55 | not ignited | self-extinguishing |
| | Notification No. 559 | fresh water | methanol | 5.5 | 0:54 | not ignited | self-extinguishing |
| | | marine water | methanol | 5.3 | 1:21 | not ignited | self-extinguishing |
| | ISO7203-3 | fresh water | acetone | 7.5 | 2:45 | not ignited | no burning surface at 15 min |
| | | marine water | acetone | 7.3 | 2:59 | not ignited | no burning surface at 15 min |
| Example 37 | Order of Ministry of Home Affairs No. 26 | fresh water | heptane | 5.6 | 2:22 | not ignited | self-extinguishing |
| | | marine water | heptane | 5.3 | 3:59 | not ignited | self-extinguishing |
| | Notification No. 559 | fresh water | acetone | 5.6 | 1:45 | not ignited | self-extinguishing |
| | | marine water | acetone | 5.3 | 2:15 | not ignited | self-extinguishing |
| | ISO7203-3 | fresh water | acetone | 6.5 | 2:43 | not ignited | no burning surface at 15 min |
| | | marine water | acetone | 6.2 | 3:15 | not ignited | no burning surface at 15 min |
| Example | Order of Ministry of Home Affairs No. 26 | fresh water | heptane | 5.4 | 2:22 | not ignited | self-extinguishing |
| | | marine water | heptane | 5.2 | 2:45 | not ignited | self-extinguishing |
| | Notification No. 559 | fresh water | methanol | 5.4 | 1:12 | not ignited | self-extinguishing |
| | | marine water | methanol | 5.2 | 1:43 | not ignited | self-extinguishing |
| | ISO7203-3 | fresh water | acetone | 6.2 | 2:32 | not ignited | no burning surface at 15 min |
| | | marine water | acetone | 6.0 | 3:38 | not ignited | no burning surface at 15 min |
| Example 39 | Order of Ministry of Home Affairs No. 26 | fresh water | heptane | 5.9 | 2:35 | not ignited | self-extinguishing |
| | | marine water | heptane | 5.6 | 2:48 | not ignited | self-extinguishing |
| | Notification No. 559 | fresh water | isopropanol | 5.9 | 1:25 | not ignited | self-extinguishing |
| | | marine water | isopropanol | 5.6 | 2:11 | not ignited | self-extinguishing |
| | ISO7203-3 | fresh water | acetone | 6.5 | 2:26 | not ignited | no burning surface at 15 min |
| | | marine water | acetone | 6.2 | 3:03 | not ignited | no burning surface at 15 min |
| Example 40 | Order of Ministry of Home Affairs No. 26 | fresh water | heptane | 5.6 | 2:45 | not ignited | self-extinguishing |
| | | marine water | heptane | 5.4 | 2:58 | not ignited | self-extinguishing |
| | Notification No. 559 | fresh water | acetone | 5.6 | 1:28 | not ignited | self-extinguishing |
| | | marine water | acetone | 5.4 | 2:23 | not ignited | self-extinguishing |
| | ISO7203-3 | fresh water | acetone | 6.8 | 2:32 | not ignited | no burning surface at 15 min |
| | | marine water | acetone | 6.4 | 3:05 | not ignited | no burning surface at 15 min |

### [Table 8]

**Table 8**

| | Cationic polyamine compound (A) | Surfactant (B) | Polybasic acid (C) | Appearance | Pour point* (°C) | Kinematic Viscosity* [-10°C] (cst) | Amount of sediment* (vol%) |
|---|---|---|---|---|---|---|---|
| Comparative Example 1 | A-1 | B-1-r | C-4 | completely clear | -20.0 | 116 | trace |
| Comparative Example 2 | A-2 | B-2-f | C-13 | completely clear | -20.0 | 125 | trace |
| Comparative Example 3 | A-2 | B-4-b | C-16 | completely clear | -22.5 | 135 | trace |
| Comparative Example 4 | A-2 | B-5-d | C-10 | completely clear | -22.5 | 145 | trace |
| Comparative Example 5 | A-1 | B-5-i | C-11 | completely clear | -20.0 | 135 | trace |
| Comparative Example 6 | A-2 | B-9-a | C-28 | completely clear | -20.0 | 137 | trace |
| Comparative Example 7 | A-1 | B-9-e | C-1(n=8) | completely clear | -22.5 | 137 | trace |

### [Table 9]

**Table 9**

| | Testing method | Diluting water | Burning solvent | Foaming performance (expansion ratio) | Fire extinguishing performance | | Fire resistance performance |
|---|---|---|---|---|---|---|---|
| | | | | | Extinction time (min:sec) | Sealing test | Burn back test |
| Comparative Example 1 | Order of Ministry of Home Affairs No. 26 | fresh water | heptane | 5.2 | 2:56 | not ignited | self-extinguishing |
| | | marine water | heptane | 5.0 | 3:43 | not ignited | self-extinguishing |
| | Notification No. 559 | fresh water | acetone | 5.2 | 1:45 | not ignited | self-extinguishing |
| | | marine water | acetone | 5.0 | 2:15 | not ignited | self-extinguishing |
| | ISO7203-3 | fresh water | acetone | 3.9 | 5:24 | not ignited | 25% burning at 11 min |
| | | marine water | acetone | 4.0 | 6:48 | not ignited | 25% burning at 7 min |
| Comparative Example 2 | Order of Ministry of Home Affairs No. 26 | fresh water | heptane | 5.1 | 3:08 | not ignited | self-extinguishing |
| | | marine water | heptane | 5.0 | 3:54 | not ignited | self-extinguishing |
| | Notification No. 559 | fresh water | isopropanol | 5.1 | 1:45 | not ignited | self-extinguishing |
| | | marine water | isopropanol | 5.0 | 2:32 | not ignited | self-extinguishing |
| | ISO7203-3 | fresh water | acetone | 4.3 | 5:30 | not ignited | 25% burning at 10 min |
| | | marine water | acetone | 4.1 | 5:59 | not ignited | 25% burning at 5 min |
| Comparative Example 3 | Order of Ministry of Home Affairs No. 26 | fresh water | heptane | 5.3 | 2:41 | not ignited | self-extinguishing |
| | | marine water | heptane | 5.1 | 3:11 | not ignited | self-extinguishing |
| | Notification No. 559 | fresh water | isopropanol | 5.3 | 1:49 | not ignited | self-extinguishing |
| | | marine water | isopropanol | 5.1 | 2:11 | not ignited | self-extinguishing |
| | ISO7203-3 | fresh water | acetone | 4.1 | 5:31 | not ignited | 25% burning at 5 min |
| | | marine water | acetone | 3.9 | 5:51 | not ignited | 25% burning at 4 min |
| Comparative Example 4 | Order of Ministry of Home Affairs No. 26 | fresh water | heptane | 5.1 | 3:26 | not ignited | self-extinguishing |
| | | marine water | heptane | 5.0 | 4:08 | not ignited | self-extinguishing |
| | Notification No. 559 | fresh water | isopropanol | 5.1 | 1:56 | not ignited | self-extinguishing |
| | | marine water | isopropanol | 5.0 | 2:40 | not ignited | self-extinguishing |
| | ISO7203-3 | fresh water | acetone | 3.8 | 5:46 | not ignited | 25% burning at 7 min |
| | | marine water | acetone | 3.7 | 6:00 | not ignited | 25% burning at 6 min |
| Comparative Example 5 | Order of Ministry of Home Affairs No. 26 | fresh water | heptane | 5.1 | 2:36 | not ignited | self-extinguishing |
| | | marine water | heptane | 5.0 | 3:05 | not ignited | self-extinguishing |
| | Notification No. 559 | fresh water | methanol | 5.1 | 0:48 | not ignited | self-extinguishing |
| | | marine water | methanol | 5.0 | 1:10 | not ignited | self-extinguishing |
| | ISO7203-3 | fresh water | acetone | 4.2 | 6:29 | not ignited | 25% burning at 3 min |
| | | marine water | acetone | 4 | 7:48 | not ignited | 25% burning at 2 min |
| Comparative Example 6 | Order of Ministry of Home Affairs No. 26 | fresh water | heptane | 5.2 | 2:40 | not ignited | self-extinguishing |
| | | marine water | heptane | 5 | 3:15 | not ignited | self-extinguishing |
| | Notification No. 559 | fresh water | isopropanol | 5.2 | 1:15 | not ignited | self-extinguishing |
| | | marine water | isopropanol | 5 | 1:43 | not ignited | self-extinguishing |
| | ISO7203-3 | fresh water | acetone | 3.9 | 7:28 | not ignited | 25% burning at 2 min |
| | | marine water | acetone | 3.7 | 8:23 | not ignited | 25% burning at 2 min |
| Comparative Example 7 | Order of Ministry of Home Affairs No. 26 | fresh water | heptane | 5.2 | 2:45 | not ignited | self-extinguishing |
| | | marine water | heptane | 5.0 | 4:11 | not ignited | self-extinguishing |
| | Notification No. 559 | fresh water | acetone | 5.2 | 2:11 | not ignited | self-extinguishing |
| | | marine water | acetone | 5.0 | 2:35 | not ignited | self-extinguishing |
| | ISO7203-3 | fresh water | acetone | 4.1 | 6:54 | not ignited | 25% burning at 4 min |
| | | marine water | acetone | 3.9 | 7:25 | not ignited | 25% burning at 3 min |

| | | | | | | | |
|---|---|---|---|---|---|---|---|
| Note for Tables 2, 3, and 8 Trace: the amount of sediment is 0.002% by volume or less based on the volume of the diluted solution. Notes for Tables 4 to 7 and 9 Order of Ministry of Home Affairs No. 26: testing method according to "Section 2, Foam Fire Extinguishing Media" in the Ministerial Order to Provide Technical Standards for Foam Fire Extinguishing Media (Order of Ministry of Home Affairs No. 26 of December 9, 1975) | | | | | | | |

Notification No. 559: test according to "*Seizousho-tou no Awashouka-setsubi no Kijun no Saimoku wo Sadameru Kokuji* (notification to define details of standard of foam fire extinguishing equipment in manufacturing plants, etc.) (Notification of Ministry of Internal Affairs and Communications No. 559)" based on the provision of Article 38(3) of Rules Concerning the Control of Hazardous Materials (Prime Minister's Office Ordinance No. 53 of 1959).

ISO7203-3: test according to ISO7203-3 "Fire extinguishing media - Foam concentrates - Part3: Specification for low-expansion foam concentrates for top application to water-miscible liquids".

Self extinguishing: ignited once immediately after starting the burn back test, but the fire instantly goes out.

## Claims

1. A fire extinguishing agent comprising: a cationic polyamine compound (A); a surfactant (B) having an anionic hydrophilic group and a fluoroalkyl group having 3 to 6 carbon atoms to which a fluorine atom is directly bonded; a polybasic acid compound (C); and at least one surfactant (D) selected from the group consisting of the following general formulae (D1) to (D5): 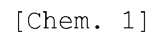 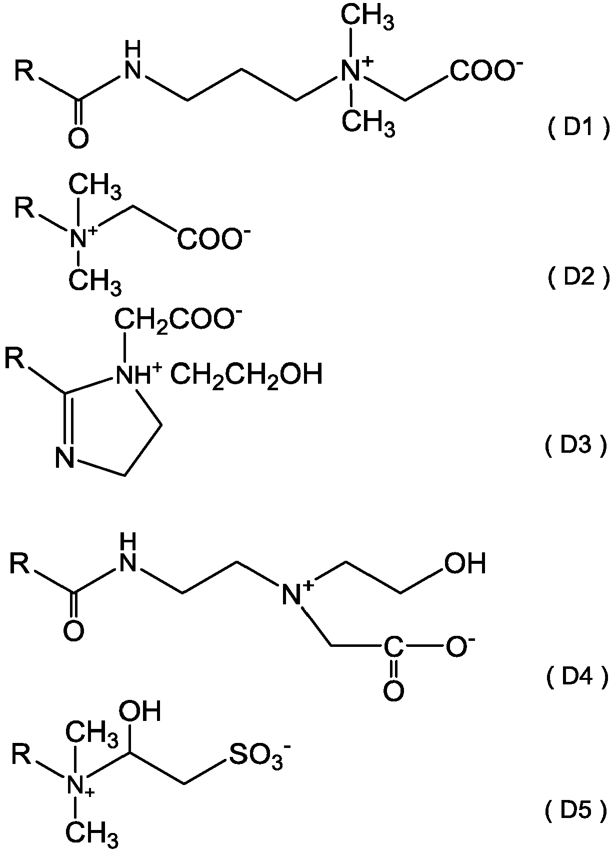 wherein R represents a hydrocarbon group having 7 to 18 carbon atoms.

2. The fire extinguishing agent according to claim 1, wherein the surfactant (D) is represented by the general formula (D1) or (D2).

3. The fire extinguishing agent according to claim 2, wherein the surfactant (D) is at least one selected from the group consisting of the following formulae (D1-a) to (D1-c) and (D2-b).

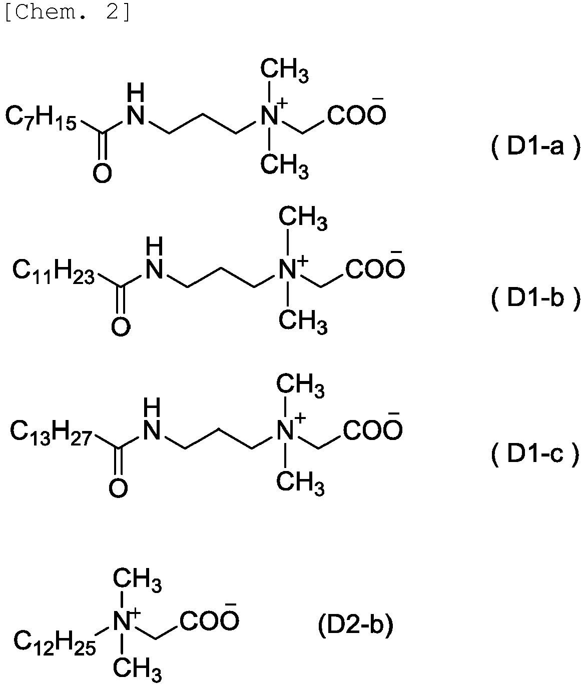

4. The fire extinguishing agent according to any one of claims 1 to 3, wherein the content of the surfactant (D) is 0.5 to 10% by mass based on the total mass of the components (A) to (D).

5. The fire extinguishing agent according to any one of claims 1 to 4, wherein the cationic polyamine compound (A) is a polyethylenimine having a primary amino group, a secondary amino group, and a tertiary amino group in a molecular, and the content of the primary amino group is 10 to 40% by mass based on all the amino groups.

6. The fire extinguishing agent according to claim 5, wherein the content of the primary amino group in the polyethylenimine is 20 to 40% by mass based on all the amino groups.

7. The fire extinguishing agent according to any one of claims 1 to 6, wherein the surfactant (B) is at least one surfactant selected from the group consisting of a fluorine-containing amino acid-type amphoteric surfactant (B-1), a fluorine-containing aminosulfonate-type amphoteric surfactant (B-2), a fluorine-containing aminocarboxylate-type amphoteric surfactant (B-3), a fluorine-containing trianion-type amphoteric surfactant (B-4), a fluorine-containing tricarboxylic acid-type amphoteric surfactant (B-5), a fluorine-containing sulfobetaine-type amphoteric surfactant (B-6), a fluorine-containing aminosulfate-type surfactant (B-7), a fluorine-containing sulphatobetaine-type surfactant (B-8), a fluorine-containing sulfobetaine-type surfactant (B-9), and a fluorine-containing amine oxide-type surfactant (B-10).

8. The fire extinguishing agent according to claim 7, wherein the surfactant (B) is at least one surfactant selected from the group consisting of the fluorine-containing amino acid-type amphoteric surfactant (B-1), the fluorine-containing aminosulfonate-type amphoteric surfactant (B-2), the fluorine-containing aminocarboxylate-type amphoteric surfactant (B-3), the fluorine-containing trianion-type amphoteric surfactant (B-4), and the fluorine-containing tricarboxylic acid-type amphoteric surfactant (B-5) .

9. The fire extinguishing agent according to any one of claims 1 to 8, wherein the polybasic acid compound (C) is a polybasic acid compound having 4 to 18 carbon atoms.

10. The fire extinguishing agent according to claim 9, wherein the polybasic acid compound (C) is represented by the following formula (C-1).
